# EUROPEAN PATENT SPECIFICATION

(11) **EP 4 528 217 B1**
(45) Date of publication and mention of the grant of the patent: **11.11.2026**
(21) Application number: 23807088.2
(22) Date of filing: 16.06.2023
(51) Int. Cl.: G01B 11/22, G01B 11/25, G01B 11/245

(54) **DEPTH DATA MEASURING HEAD, MEASURING APPARATUS, AND MEASURING METHOD**
TIEFENDATENMESSKOPF, MESSVORRICHTUNG UND MESSVERFAHREN
TÊTE DE MESURE DE DONNÉES DE PROFONDEUR, APPAREIL DE MESURE ET PROCÉDÉ DE MESURE

(30) Priority: 18.05.2022 CN 202210542889; 18.05.2022 CN 202210543183; 18.05.2022 CN 202210543184; 02.11.2022 CN 202211360974
(43) Date of publication of application: 26.03.2025
(73) Proprietor: Nanjing Percipio Technology Limited, Jiangsu Province, Nanjing (CN)
(72) Inventor: WANG, Minjie, Shanghai 201203 (CN); LIANG, Yushi, Shanghai 201203 (CN)
(74) Representative: Herzog IP Patentanwalts GmbH
(86) International application number: PCT/CN2023/100797
(87) International publication number: WO 2023/222139

(56) References cited:
- EP-A1- 3 943 882
- CN-A- 110 411 374
- CN-A- 110 411 374
- CN-A- 110 871 457
- CN-A- 111 536 904
- CN-A- 111 692 987
- CN-A- 111 829 449
- CN-A- 112 361 991
- CN-A- 112 986 237
- US-A1- 2021 041 231
- US-B1- 10 753 737

## Description

### TECHNICAL FIELD

The present disclosure relates to the field of three-dimensional imaging, in particular to a depth data measuring head, a measuring device and a measuring method.

### BACKGROUND

A depth camera is a collection device that collects depth information of a target object. This type of camera is widely used in 3D scanning, 3D modeling and other fields. For example, more and more smartphones are now equipped with depth cameras for face recognition. In the prior art, striped light encoding can be used to achieve high-precision imaging. Document D1 (EP 3 943 882 A1) discloses a striped-light projection and imaging scheme. In D1, a projection device projects and scans line-coded structured light across a target region, and two sensors capture images of the projected patterns. However, striped light encoding requires shooting multiple different striped light images to synthesize a single depth map, so the resulting depth image frame rate is low and cannot meet the requirements of real-time high-precision dynamic imaging.

For this reason, an improved depth data measuring solution is needed.

### SUMMARY

A technical problem to be solved by the present disclosure is to provide an improved depth data measuring solution. This solution enables an image sensor which includes multiple memory cell sets with phase-shift exposure, to image projected linear light with successive phase-shifted in different subcycles. As a result, during a single scan of the linear light, the N memory cell sets in the image sensor can each capture a different phase-shifted striped light image, thereby achieving the acquisition of N striped light images in a single scan of the linear light. This significantly improves the speed of depth image synthesis without sacrificing the resolution of the image sensor and is suitable for capturing moving target objects.

According to a first aspect of the present disclosure, a depth imaging measuring head is provided, including: a projection device for projecting linear light that moves in a first direction to an imaging area, wherein the length of the linear light is in a second direction perpendicular to the first direction; and an image sensor including N memory cell sets, each memory cell set exposed in an exposure switch cycle t*ₑ* that is phase-shifted by 2π/N relative to each other, where N is an integer greater than 1, the projection device completes a single pattern scan within a scanning cycle 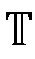 , which includes multiple repeating subcycles 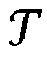 . In each subcycle 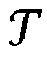 , the linear light changes brightness with a projection cycle t*ₚ*, which has the same duration as the exposure switch cycle t*ₑ*. The projection cycle t*ₚ* includes N waveform projection areas, each with a width of 2π/N, where the light intensity in each waveform projection area is encoded such that when a single pattern scan is completed within the scanning cycle 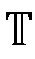 , the N memory cell sets in the image sensor each capture a different striped-light pattern. The N striped-light patterns form a set of N-step phase-shifted patterns, each having a phase-shifted of 2π/N relative to the others.

Optionally, the projection cycle t*ₚ* of the linear light is synchronized with the exposure switch cycle t*ₑ* of the first memory cell set.

Optionally, in each subphase T*ᵢ*, the linear light has the same projection waveform within each projection cycle t*ₚ*, which is a rectangular wave with a bright area of 2π/N phase and a dark area of 6π/N phase, where the N striped-light patterns are striped-light patterns in which the bright area and the dark area are repeated.

Optionally, the dwell time t*_{c}* corresponding to the linear light scanning on each column of pixels is not less than the quotient of the scanning cycle 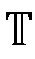 divided by the number of columns C, and the dwell time t*_{c}* is more than 10 times the projection cycle t*ₚ*.

Optionally, in each subphase T*ᵢ*, the linear light is projected m times with the projection cycle t*ₚ*, and the duration of each subphase T*ᵢ* is greater than the dwell time t*_{c}*.

Optionally, each pixel in the image sensor includes N memory cells, and each of the N memory cells of a pixel belongs to one of the N memory cell sets. Optionally, the N memory cells included in each pixel are N charge memory cells, and the exposure positions of the N charge memory cells corresponding to the same pixel are the same, but the exposure cycles are phase-shifted 2π/N from each other, and when a single pattern scan is completed within the scanning cycle 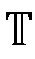 , a set of N-step phase-shifted patterns are obtained from the N sets of charge memory cells, and the set of N-step phase-shifted patterns is used to generate one depth map of the imaging area.

Optionally, the image sensor includes N sets of uniformly distributed pixels on the imaging surface, each pixel having one corresponding memory cell. When a single pattern scan is completed within the scanning cycle 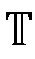 , the set of N-step phase-shifted patterns is obtained from the N memory cell sets corresponding to the N pixel sets, and the set of N-step phase-shifted patterns is used to generate one depth map of the imaging area.

Optionally, the projection device completes a single pattern scan in a first scanning cycle 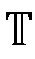 such that the N memory cell sets in the image sensor each capture a different striped-light pattern, and the N striped-light patterns form a set of Gray code patterns. The projection device completes another single pattern scan in a second scanning cycle 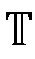 , such that the N memory cell sets each capture a different striped-light pattern, and the N striped-light patterns form a set of N-step phase-shifted pattern. Based on the set of Gray code patterns, a depth map of the imaging area is generated from the set of N-step phase-shifted patterns.

Optionally, the projection device includes: a light-emitting device for generating linear light; and a reflecting device for reflecting the linear light, thereby projecting the linear light moving in a direction perpendicular to the stripe direction to the capturing area at a predetermined frequency, the length direction of the linear light is the length direction of the projected striped light, and the reflecting device includes one of the following: a mechanical galvanometer that vibrates back and forth at the predetermined frequency; a micromirror device that reciprocates at the predetermined frequency; and a mechanical rotating mirror that rotates unidirectionally at the predetermined frequency.

Optionally, the image sensor includes a first image sensor and a second image sensor whose relative positions are fixed, wherein the first image sensor and the second image sensor each include the N memory cell sets and are exposed synchronously with each other.

Optionally, the projection device completes α pattern scans within α scanning cycles 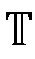 , each of the scanning cycle 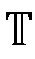 includes multiple repeating subcycles 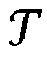 , each subcycle 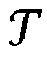 includes N subphases T*₁*-T*_{N}*, and in each subphase T*ᵢ*, the linear light is projected with brightness changes at the projection cycle t*ₚ*, the duration of the projection cycle t*ₚ* is the same as the duration of the exposure switch cycle t*ₑ*, and the projection cycle t*ₚ* includes a bright area, wherein, in the subphases T₁-T*_{N}*, the position of the bright area in the projection cycle t*ₚ* changes at an interval of 2π/αN phase, so that when a single pattern scan is completed within each scanning cycle 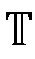 , the N memory cell sets of the image sensor each image a different striped-light pattern, and when α pattern scans are completed within α scanning cycles 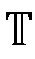 , αN striped light patterns constitute a set of αN step phase-shifted patterns with a 2π/αN phase-shifted between each other, wherein α is an integer greater than or equal to 2.

Optionally, the projection device completes a single pattern scan within a scanning cycle 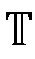 , the scanning cycle 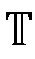 includes a plurality of repeating subcycles 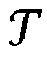 , each subcycle 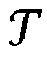 includes N subphases T₁-T*_{N}*, and in each subphase T*ᵢ*, the linear light is projected with brightness changes at the projection cycle t*ₚ*, the duration of the projection cycle t*ₚ* is the same as the duration of the exposure switch cycle t*ₑ*, and the projection cycle t*ₚ* includes a bright area, wherein, in the subphases T*₁*-T*_{N}*, the position of the bright area in the projection cycle t*ₚ* changes at an interval of 2π/N phase, so that when a single pattern scan is completed within each scanning cycle 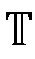 , the N memory cell sets of the image sensor each image a different striped-light pattern, and the N striped-light patterns constitute a set of N-step phase-shifted patterns with a 2π/N phase-shifted between each other. Optionally, N=2*ⁿ*, and n is an integer greater than or equal to 1.

According to a second aspect of the present disclosure, a depth data measuring device is provided, including: the depth data measuring head according to the first aspect, and a processor connected to the depth data measuring head, configured to obtain one depth map of the imaging area from the obtained N striped-light patterns when completing a single pattern scan within the scanning cycle 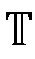 .

According to a third aspect of the present disclosure, a depth data measuring device is provided, including a first depth imaging measuring head and a second depth imaging measuring head whose relative positions are fixed, and the first depth imaging measuring head and the second depth imaging measuring head are the depth data measuring heads as described in the first aspect, wherein after the first depth imaging measuring head completes a first pattern scan, the second depth imaging measuring head performs a second pattern scan, and a first set of N-step phase-shifted patterns obtained by the first pattern scan and a second set of N-step phase-shifted patterns obtained by the second pattern scan are synthesized into depth information of an object to be imaged in an imaging area based on the relative position.

According to a fourth aspect of the present disclosure, a depth data measuring method is provided, including: projecting linear light that moves in a first direction to an imaging area, wherein the length of the linear light is in a second direction perpendicular to the first direction, linear light projection completes a single pattern scan in one scanning cycle 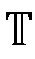 , which includes multiple repeating subcycles 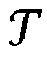 , in each subcycle 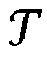 , the linear light changes brightness with a projection cycle t*ₚ*, which has the same duration as the exposure switch cycle t*ₑ*, the projection cycle t*ₚ* includes N waveform projection areas, each with a width of 2π/N, where the light intensity in each waveform projection area is encoded, where N is an integer greater than 1; capturing the imaging area using an image sensor including N memory cell sets to obtain N image frames under the linear light scanning projection, each memory cell set exposed in an exposure switch cycle t*ₑ* that is phase-shifted by 2π/N relative to each other; and obtaining depth data of the object to be measured in the imaging area based on the image frames, the light intensity in each waveform projection area is encoded such that when a single pattern scan is completed within the scanning cycle 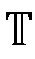 , the N memory cell sets in the image sensor each capture a different striped-light pattern, the N striped-light patterns form a set of N-step phase-shifted patterns, each having a phase-shifted of 2π/N relative to the others.

According to a fifth aspect of the present disclosure, a depth data measuring method is provided, including: using a first depth imaging measuring head of a depth data measuring device to perform a first pattern scan on an imaging area to obtain a first set of N-step phase-shifted patterns; using a second depth imaging measuring head of the depth data measuring device to perform a second pattern scan on the imaging area to obtain a second set of N-step phase-shifted patterns; synthesizing depth information of an object to be imaged in the imaging area from the first set of N-step phase-shifted patterns and the second set of N-step phase-shifted patterns based on the relative positions of the first depth imaging measuring head and the second depth imaging measuring head, wherein the scanning imaging of the first depth imaging measuring head and the second depth imaging measuring head each include: projecting linear light that moves in a first direction to the imaging area, wherein the length of the linear light is in a second direction perpendicular to the first direction, linear light projection completes the single pattern scan in one scanning cycle 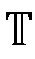 , which includes multiple repeating subcycles 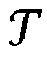 , in each subcycle 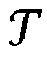 , the linear light changes brightness with a projection cycle t*ₚ*, which has the same duration as the exposure switch cycle t*ₑ*, the projection cycle t*ₚ* includes N waveform projection areas, each with a width of 2π/N, where the light intensity in each waveform projection area is encoded, where N is an integer greater than 1; capturing the imaging area using an image sensor including N memory cell sets to obtain N image frames under the linear light scanning projection, each memory cell set exposed in an exposure switch cycle t*ₑ* that is phase-shifted by 2π/N relative to each other; and obtaining depth data of the object to be measured in the imaging area based on the image frames, the light intensity in each waveform projection area is encoded such that when a single pattern scan is completed within the scanning cycle 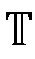 , the N memory cell sets in the image sensor each capture a different striped-light pattern, the N striped-light patterns form a set of N-step phase-shifted patterns, each having a phase-shifted of 2π/N relative to the others.

Optionally, the method further includes: the depth data measuring device captures multiple sets of first set N-step phase-shifted patterns and multiple sets of second set N-step phase-shifted patterns in relative motion with respect to the object to be imaged; and synthesizes the depth information generated from the multiple sets of first set N-step phase-shifted patterns and multiple sets of second set N-step phase-shifted patterns into the model information of the object to be imaged based on a calibration point.

Thus, the depth imaging measuring head of the present invention can simultaneously obtain the N-step phase-shifted map under a single scan of linear light while maintaining the image resolution, thereby improving the imaging speed.

### BRIEF DESCRIPTION OF FIGURES

The above and other objects, features and advantages of the present disclosure will become more apparent by describing the exemplary embodiments of the present disclosure in more detail with reference to the accompanying drawings, wherein, in the exemplary embodiments of the present disclosure, the same reference numerals generally represent same parts.
FIG. 1 illustrates the principle of depth imaging using stripe-coded structured light.
FIG. 2 illustrates another example of projecting stripe-coded structured light.
FIG. 3 illustrates a schematic diagram of the composition of a depth data measuring head according to an embodiment of the present invention.
FIGS. 4A-B illustrate enlarged operation examples of the projection device shown in FIG. 3.
FIG. 5 illustrates a simplified perspective schematic diagram of the projection device used in the present invention.
FIG. 6A-B illustrate examples of N memory cell sets included in an image sensor used in the present invention.
FIG. 7 illustrates an example of the relative relationship between the exposure cycles of different memory cell sets of the same image sensor.
FIG. 8 illustrates a schematic diagram of imaging of different memory cell sets in a subcycle 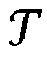 .
FIG. 9 illustrates an example of the relative relationship between the projected light waveform and the exposure cycle of memory cell sets 1-4 when imaging sinusoidal four-step phase-shifted patterns.
FIG. 10 illustrates an example of patterns 1-4 obtained from memory cell sets 1-4 after completing a scanning cycle 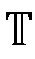 .
FIG. 11 illustrates an example of depth map imaging using Gray code combined with four-step phase shift.
FIG. 12 illustrates a schematic diagram of imaging of different memory cell sets in a subcycle 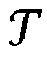 .
FIGS. 13A-D illustrates the relative relationship between the projected light waveform of the subphases T*₁-*T*₄* and the exposure cycle of the memory cell sets 1-4.
FIG. 14 illustrates an example of patterns 1-4 obtained from the memory cell sets 1-4 after completing a scanning cycle 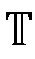 .
FIG. 15 illustrates a schematic diagram of a depth data measuring device according to an embodiment of the present invention.
FIGS. 16A-B show schematic flow charts of a depth data measuring method according to embodiments of the present invention.
FIG. 17 shows an example of partial depth information missing of an object to be imaged when a single camera uses structured light for imaging.
FIG. 18 shows an example of using dual-camera imaging to improve partial depth information missing of the object to be imaged.
FIG. 19 shows a schematic diagram of a depth data measuring device according to an embodiment of the present invention.
FIG. 20 illustrates a schematic diagram of the composition of a depth data measuring device according to an embodiment of the present invention.
FIG. 21 illustrates a schematic flow chart of a depth data measuring method according to an embodiment of the present invention.

### DETAILED DESCRIPTION

Preferred embodiments of the present disclosure will be described in more detail below with reference to the accompanying drawings. Although preferred embodiments of the present disclosure are shown in the drawings, it should be understood that the present disclosure can be embodied in various forms and should not be limited to the embodiments set forth herein. Rather, these embodiments are provided so that this disclosure will be thorough and complete, and will fully convey the scope of the disclosure to those skilled in the art.

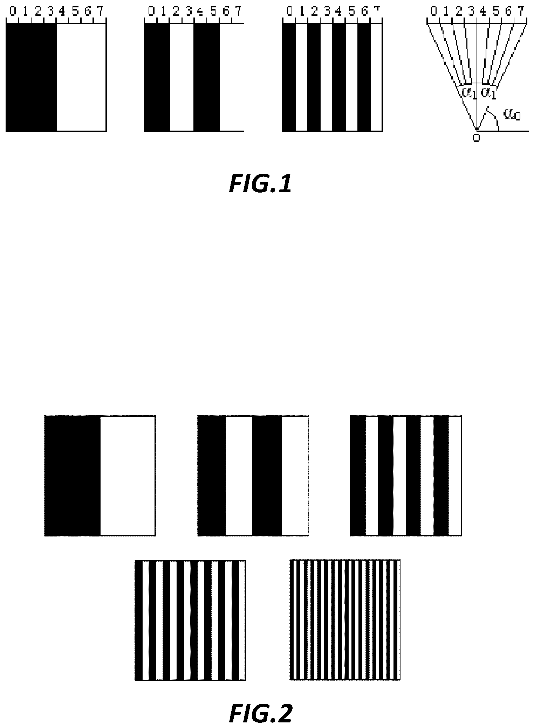

According to the principle of structured light measurement, accurate determination of the scan angle α is the key to the entire measurement system. Point and line-shaped structured light can calculate and obtain the scanning angle through mechanical devices such as rotating mirrors, and the significance of image encoding and decoding is to determine the scanning angle of the encoded structured light (i.e., surface structured light) system. FIG. 1 illustrates the principle of depth imaging using stripe-coded structured light. For the convenience of understanding, FIG. 1 briefly illustrates the coding principle of the striped structured light with two gray-level three-bit binary time coding. The projection device can sequentially project three patterns as shown to an object to be measured in the capturing area. The projection space is divided into 8 areas with bright and dark of two gray scales in the three patterns. Each area corresponds to a respective projection angle, where it can be assumed that the bright area corresponds to a code "1" and the dark area corresponds to a code "0". Combining the coded values of a point on the scene in the projected space in the three coded patterns according to the projected order, to obtain the area coded value of the point, thereby determining the area where the point is located and decoding to obtain the scan angle of the point.

To improve matching accuracy, the number of projected patterns in the temporal code can be increased. FIG. 2 illustrates another example of projecting stripe-coded structured light. Specifically, a two gray-level five-bit binary time code is shown. In the application scenario of binocular imaging, this means that for example, each pixel in each left and right image frame contains five 0 or 1 region encoding values, which enables left and right image matching with higher accuracy (e.g., pixel level). It should be understood that, under the condition that the projection rate of the projection device remains unchanged, compared with the three coding patterns in FIG. 1, the example in FIG. 2 is equivalent to realizing higher-precision image matching at a higher cost in the time domain.

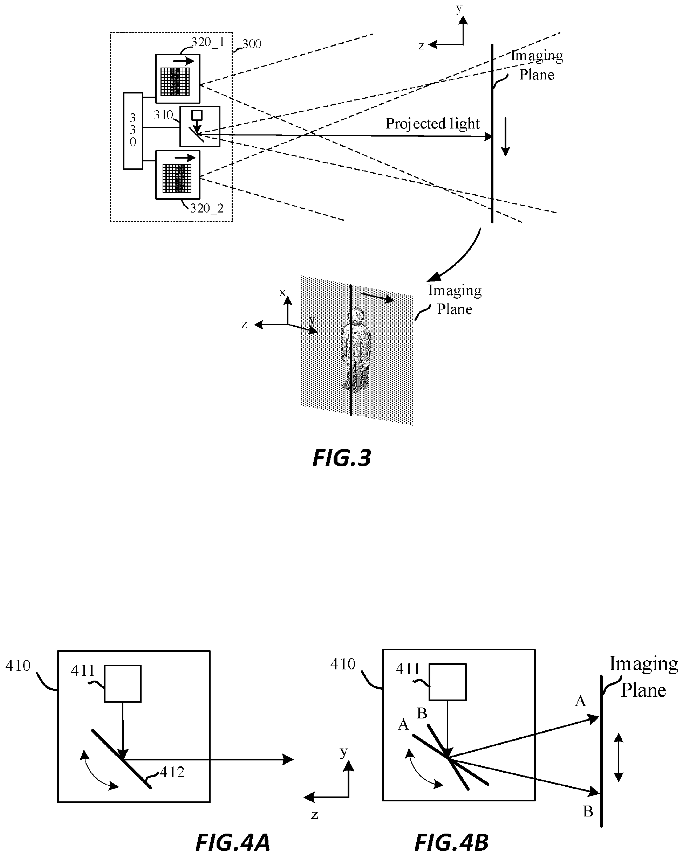

FIG. 3 shows a schematic diagram of using linear light to project striped light images to obtain depth data. As shown in FIG. 3, the depth data measuring head 300 includes a projection device 310 and two image sensors 320_1 and 320_2. In a monocular implementation, the depth data measuring head 300 can also use one image sensor for shooting.

The projection device 310 is used to scan and project structured light with stripe coding to the capturing area. For example, in three consecutive image frame projection cycles, the projection device 310 can successively project three patterns as shown in FIG. 1, and the imaging results of these three patterns can be used to generate depth data. 320_1 and 320_2, which can be respectively referred to as the first and second image sensors, have a predetermined relative position relationship and are used to capture the capturing area to obtain the first and second two-dimensional image frames under the illumination of the structured light. For example, in the case where the projection device 310 projects the three patterns as shown in FIG. 1, the first and second image sensors 320_1 and 320_2 can respectively image the capturing area (for example, the imaging plane in FIG. 3 and the area within a certain range before and after it) projected with the three patterns in three synchronized image frame imaging cycles.

As shown in FIG. 3, the projection device 310 can project a linear light extending in x direction in z direction (i.e., toward the capturing area). The projected linear light can continue to move in y direction to cover the entire imaging area. The lower part of FIG.3 provides a more understandable illustration of the scanning of the linear light for the perspective view of the capturing area.

In the present disclosure, define the direction in which the light exits the measuring head as the z direction, the vertical direction of the shooting plane as the x direction, and the horizontal direction as the y direction. Therefore, the stripe structured light projected by the projection device can be the result of the linear light extending in the x direction moving in the y direction. Although in other embodiments, the stripe structured light obtained by the linear light extending in the horizontal y direction moving in the x direction can also be synchronized and imaged, it is still preferred to use vertical striped light for illustration in the present disclosure.

FIGS. 4A-B illustrate enlarged operation examples of the projection device shown in FIG. 3. Specifically, as shown in FIG. 3, in the projection device 310, the laser light emitted by a laser generator (such as the laser generator 411 shown in detail in FIGS. 4A-B) is scanned and projected to the capturing area (gray area in FIG. 3) through a projection mechanism (for example, the projection mechanism 412 shown in detail in FIGS. 4A-B), so as to perform active structured light projection on the object to be measured (for example, the person in FIG. 4 ) in the capturing area. A pair of image sensors 320_1 and 320_2 images the capturing area, thereby obtaining image frames required for depth data calculation. As shown in FIG. 3, the dotted lines emitted by the projection device 310 are used to represent its projection range, while the dotted lines emitted by the image sensors 320_1 and 320_2 are used to represent their respective imaging ranges. The capturing area is usually located in the overlapping area of the respective projection and imaging ranges of the three.

In practical applications, the laser generator is used to generate linear and/or infrared laser light, and the laser generator performs high-speed switching to scan and project light and dark structured light corresponding to the stripe code. High-speed switching can include high-speed switching of laser generators and high-speed code switching.

In one embodiment, the laser generator can continuously emit laser light with the same intensity, and the projected striped-light pattern is realized by turning on and off the laser generator. In this case, since the laser generator only projects light of one intensity with a different periodic duty cycle, each pixel of the image sensor integrates the projected light to determine the presence or absence of irradiation light, the equipped image sensor can be a black and white image sensor.

In another embodiment, the laser generator itself can emit laser light with varying light intensity, for example, a laser light whose output light intensity changes sinusoidally within a large period according to the applied power. The sinusoidally transformed laser light described above can be combined with striped light projection, whereby a pattern of alternating light and dark with varying brightness between the bright stripes can be scanned and projected. In this case, the image sensor needs to have the capability of imaging different light intensities, so it can be a multi-level grayscale image sensor. Clearly, grayscale projection and imaging can provide more precise pixel-to-pixel matching than black-and-white projection and imaging, thereby improving the accuracy of depth data measurements.

In one embodiment, the laser generator 411 can be a linear laser generator that generates a line of light extending in the x direction (a direction perpendicular to the paper in FIGS. 4A-B). The linear light is then projected onto the imaging plane by a reflective mechanism 412 that can oscillate along an axis in the x-direction. The swinging range of the reflection mechanism 412 is shown in FIG. 4B. As a result, reciprocating linear light scanning can be performed within the range AB of the imaging plane.

It should be understood that in order to realize the projection of the striped-light pattern, the linear light itself needs to change from bright to dark (or in a simple implementation, change from turn on to turn off) during the continuous movement of the linear light in the y direction. For example, when it is necessary to scan the first pattern of FIG. 1, when the projection mechanism 412 scans through the front α/2 angle, the laser generator 411 remains off, and when it scans to the rear α/2 angle, the laser generator 411 turns on, thereby realizing a pattern with dark on the left and bright on the right. When it is necessary to scan the second pattern of FIG. 1, when the projection mechanism 412 scans through the 0~α/4 angle, the laser generator 411 remains off, and when it scans to the α/4~α/2 angle, the laser generator 411 turns on, and when it scans through the α/2~3α/4 angle, the laser generator 411 turns off again, and when it scans to the 3α/4~α angle, the laser generator 411 turns on. Thus, a dark-bright-dark-bright pattern is realized. Similarly, the third pattern of FIG. 1 and the pattern with finer striped light shown in FIG. 2 can be realized with more frequent changes based on the rotation angle.

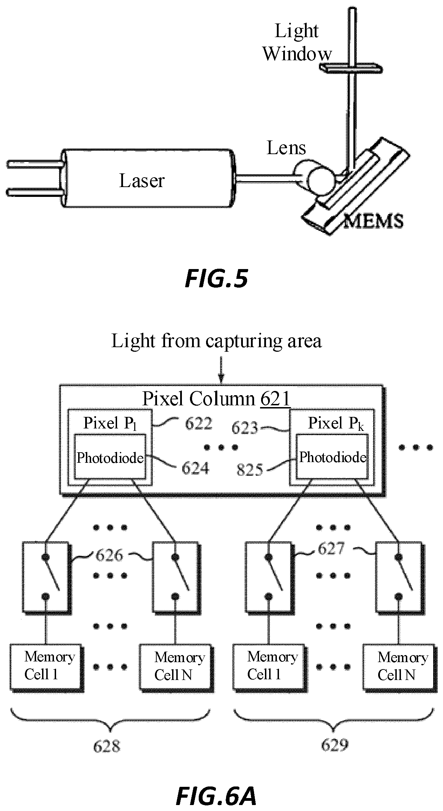

In one embodiment, the above-mentioned reflection mechanism 412 can be a micromirror device (also referred to as a digital micromirror device, DMD), and can be implemented as a MEMS (Micro Electro Mechanical System). FIG. 5 illustrates a simplified perspective schematic diagram of the projection device used in the present disclosure. As shown in FIG. 5, linear light can be obtained from the point laser light generated by the laser through the lens (corresponding to the linear laser generator 411 in FIG. 4), and the above-mentioned linear light is reflected by a micromirror device in the form of MEMS, and the reflected linear light is then projected to the external space through a light window. Micromirror devices have extremely high performance. For example, commercially available MEMS can perform highly stable reciprocating vibrations at a frequency of 2k, thus laying the foundation for high-performance depth imaging.

In order to obtain a high-precision depth map, the depth data measuring head shown in FIG. 3 needs to project multiple different striped-light patterns in sequence. In other words, existing solutions use captured striped-light patterns to synthesize a depth map, exchanging time for precision. Furthermore, since different striped-light patterns captured in N consecutive imaging cycles are used to synthesize one depth map, the existing depth data measuring method is only applicable to occasions where the captured object remains motionless during the N imaging cycles, which greatly limits the application scope of the technology of obtaining depth data using actively projected striped light images.

In view of this, the present invention proposes a new depth data measurement solution, which utilizes an image sensor provided with different memory cell sets capable of phase-shifted exposure, and by skillfully adjusting the brightness variations of the projected linear light, in a single scan of the linear light, different memory cell sets of the image sensor can each obtain a different phase-shifted stripe image, thereby realizing multiple striped images capture in a single linear light scan. As a result, the synthesis speed of the depth map can be greatly improved, and it is suitable for shooting moving target objects.

In one embodiment, the present invention can be implemented as a depth imaging measuring head, including: a projection device and an image sensor. The projection device can be used to project a linear light moving along a first direction (e.g., the y direction in FIG. 3) to an imaging area, wherein the length direction of the linear light is a second direction perpendicular to the first direction (e.g., the x direction in FIG. 3). In one embodiment, the projection device can have an implementation structure as shown in FIG. 5, including a linear light generating device and a projection mechanism for reflecting and projecting the linear light and capable of changing the projection direction within a certain angle.

Each pixel in the image sensor includes N memory cells, each of the N memory cells of each pixel belongs to one of N memory cell sets, and each memory cell set is exposed with an exposure switching cycle t*ₑ* separated by a phase of 2π/N, wherein N is an integer greater than 1.

Here, for ease of understanding, N=4 is taken as an example to illustrate the structure and exposure of the image sensor. FIGS. 6A-B illustrate examples of N memory cell sets included in the image sensor used in the present invention. The N memory cell sets included in the image sensor may be N memory cells per pixel; or the image sensor may include N pixel sets, each pixel corresponding to one memory cell. FIG. 6A shows the structure of a pixel column in which each pixel includes N memory cells. As shown in FIG. 6A, a pixel column 621 may include k pixels P₁-Pₖ (in the example of 600x800 resolution, k=600). Each pixel includes the same structure, that is, a photosensitive element, N switches and N memory cells, wherein each switch corresponds to controlling the charge storage of one memory cell. Specifically, pixel P₁ 622 may include a photodiode 624 used as a photosensitive element, N switches 626 and N memory cells 628. Pixel Pₖ 623 may include a photodiode 625 used as a photosensitive element, N switches 627 and N memory cells 629.

The memory cell is, for example, a unit for accumulating and storing the charge generated by the charge photodiode based on the received light and outputting it based on the charge storage amount. The N memory cells corresponding to the same pixel all obtain charge from one photosensitive element, but each is exposed with an exposure switching cycle t*ₑ* that is 2π/N phases apart from each other. In each pixel, there is one memory cell corresponding to one of the N memory cell sets. Thus, in a 600x800 pixel image sensor, if it is assumed that N=4, 600x800x4 memory cells are included. These 600x800x4 memory cells belong to 4 sets, each set includes 600x800 memory cells, each corresponding to a different pixel. The memory cells of each set can be exposed with the same cycle, and there is a phase difference of π/2 between adjacent sets. Since the N memory cells share a photosensitive element, it is possible to achieve multi-image acquisition in a single scan without reducing the original resolution of the image sensor.

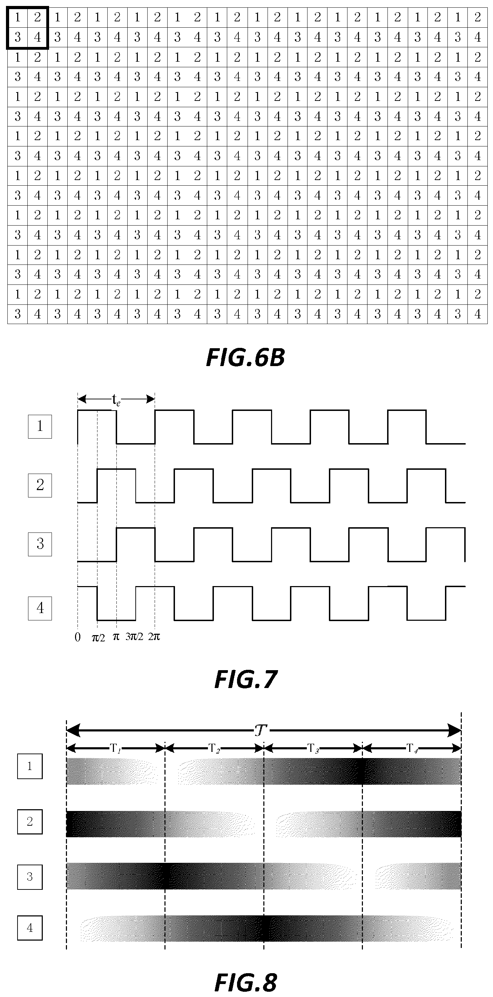

FIG. 6B shows an example of an image sensor including N pixel sets. For convenience of explanation, an example of 16x24 pixels is shown in FIG. 6B. It should be understood that the image sensor actually used may have more pixels, such as 600x800 pixels. The image sensor shown in FIG. 6B includes 4 (N=4) pixel sets uniformly distributed on the entire imaging surface, represented by 1, 2, 3, and 4 in the blocks as shown, respectively. Here, the four types of pixels are "uniformly distributed" on the entire imaging surface, which means that when the linear light is scanned and projected in the y direction, each pixel set has the same (or approximately the same) number of pixels illuminated in the current irradiated area. In a preferred embodiment, the four-pixel sets are distributed with one pixel as a unit, as shown in FIG. 6B. That is, it can be considered that the image sensor shown in FIG. 6B includes a plurality of "pixel units" (as shown in the bold black frame as shown, in the example of FIG. 6B, 8x12 pixel units with the same structure can be included), and the pixels included in each pixel unit belong to one of the four-pixel sets. In other embodiments, each pixel sets can also be distributed with two pixels (for example, two pixels arranged adjacently in the x direction) as a unit.

FIG. 7 shows an example of the relative relationship between exposure cycles of different memory cell sets in the same image sensor. In the example of FIG. 7, the four memory cell sets have the same exposure switch cycle t*ₑ*, and all are switched at a duty cycle of 50%. In other words, all memory cells of the image sensor have the same exposure switch waveform. However, the difference is that the waveforms of different memory cell sets have the same phase difference of π/2. In one implementation, the exposure switch cycle t*ₑ* takes a typical value of 20ns, for example. This means that each memory cell in the image sensor operates at an interval of 10ns to open for exposure and 10ns to close, but the opening time of the second memory cell set is 5ns later than that of the first set, the opening time of the third memory cell set is 5ns later than that of the second set, and the opening time of the fourth memory cell set is 5ns later than that of the third set (which can also be regarded as 5ns earlier than that of the first memory cell set).

When the image sensor used is capable of performing grouped phase-shifted exposure as shown in FIGS. 6A-B and FIG. 7, the linear light projection of the projection device can be cleverly set to achieve multi-image acquisition in a single scan.

Specifically, the projection device can complete a pattern scan within a scanning cycle (for example, recorded as scanning cycle 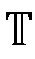 ). In the scanning cycle 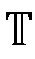 , it is assumed that the linear light scans the imaging area at a uniform speed and repeats with multiple repeating subcycles 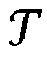 . A light projection embodiment in each subcycle 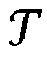 is described in detail below.

In each subcycle 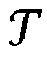 , the linear light changes its brightness with a projection cycle t*ₚ*, and the duration of the projection cycle t*ₚ* is the same as the duration of the exposure switch cycle t*ₑ*. The projection cycle t*ₚ* includes N waveform projection areas with a width of 2π/N, and the projected light intensity of each waveform projection area is encoded, so that when a pattern scan is completed within the scanning cycle 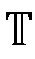 , the N memory cell sets of the image sensor each image a different striped-light pattern, and the N striped-light patterns constitute a set of N-step phase-shifted patterns with a 2π/N phase shift between each other.

In one embodiment, each waveform projection area corresponds to a projected rectangular wave with a width of 2π/N or 0 (0 can also be regarded as a rectangular wave with a light intensity of 0), and based on the light intensity distribution of a set of N-step phase-shifted patterns corresponding to the subphase 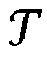 , the light intensity of each waveform projection area is determined.

In one embodiment, a set of N-step phase-shifted patterns is a sine wave four-step phase-shifted pattern, and the light intensity value of each waveform projection area in each projection cycle t*ₚ* is obtained based on the exposure of N memory cell sets corresponding to the waveform projection area, wherein the light intensity value is not less than zero.

For the convenience of explanation, it is assumed here that N=4, and it is assumed that the laser intensity of each 1/4 cycle during the line laser scanning projection cycle t*ₚ* is Q₁/Q₂/Q₃/Q₄ respectively. Therefore, within a subcycle 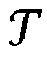 , the integrated brightness of the four pixels is as follows: $\begin{matrix}{P}_{1} = Σ \left({Q}_{1}+{Q}_{2}\right) \\ {P}_{2} = Σ \left({Q}_{2}+{Q}_{3}\right)\end{matrix}$ $\begin{matrix}{P}_{3} = Σ \left({Q}_{3}+{Q}_{4}\right) \\ {P}_{4} = Σ \left({Q}_{1}+{Q}_{4}\right)\end{matrix}$ (1)

Therefore, the values of Q₁~Q₄ can be determined according to the pattern type corresponding to the required 4-step phase-shifted imaging.

FIG. 8 illustrates a schematic diagram of imaging of different memory cell sets in a subcycle 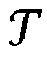 . In the example shown in FIG. 8, the desired phase-shifted patterns are sinusoidal light waveforms with a phase difference of π/2. In this case, the values of the four memory cell sets P₁~P₄ can be: $\begin{matrix}{P}_{1} = Q / 2 * sin t + Q / 2 \\ {P}_{2} = - Q / 2 * cos t + Q / 2 \\ {P}_{3} = - Q / 2 * sin t + Q / 2 \\ {P}_{4} = Q / 2 * cos t + Q / 2\end{matrix}$ (2) Here, Q can be regarded as the integral brightness of the brightest part of the phase-shifted stripe shown in FIG. 8, and the value of t can correspond to different angular positions in a subcycle 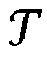 . When the linear light is scanned at a uniform speed, the value of t can correspond to pixels at different positions in the image sensor.

The brightness values of Q₁~Q₄ with respect to t can be inversely calculated through formula (2). Since there are N=4 unknown numbers Q₁~Q₄ in formula (2), and the rank of formula (2) is N-1=3, Q₁~Q₄ can actually have countless solutions. One solution is given as follows: $\begin{matrix}{Q}_{1} = A / 2 * sin t + A / 2 \\ {Q}_{2} = 0\end{matrix}$ $\begin{matrix}{Q}_{3} = - A / 2 * cos t + A / 2 \\ {Q}_{4} = A / 2 \left(cost-sint\right)\end{matrix}$ (3)

Where O*A=Q, O is the number of exposure cycles received by each pixel when the pixel is scanned by the linear light (for example, in the following example, each pixel column can complete 100 exposures in 2µs when it is scaned by the linear light, and O can be regarded as 100).

However, since the light intensity cannot be negative, the values of Q₁~Q₄ need to be kept non-negative. Formula (3) is valid in the range of t=0~π/4, and when the linear light is scanned to the range of t=π/4~π/2, another solution value can be given based on formula (2): $\begin{matrix}{Q}_{1} = A / 2 * cos t + A / 2 \\ {Q}_{2} = A / 2 \left(sint-cost\right) \\ {Q}_{3} = - A / 2 * sin t + A / 2 \\ {Q}_{4} = 0\end{matrix}$ (4)

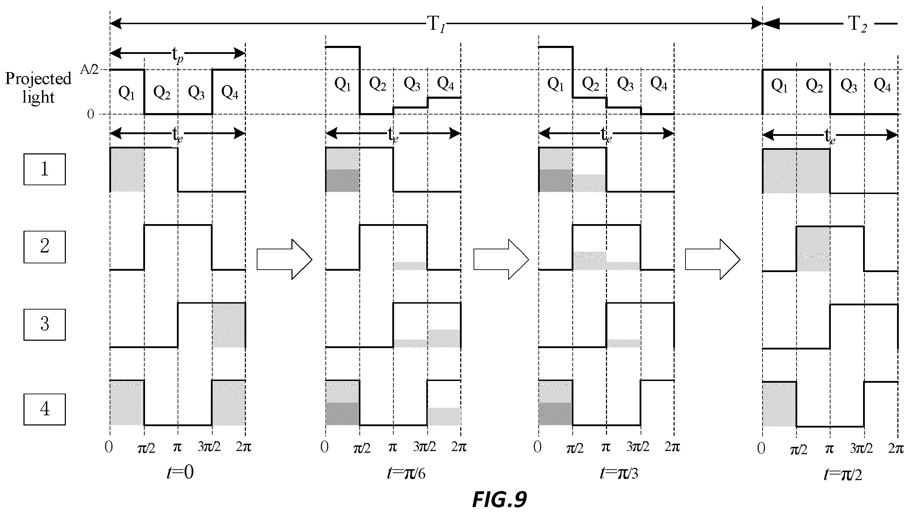

FIG. 9 shows an example of the relative relationship between the value of projected light waveform value and the exposure cycle of memory cell sets 1-4 when performing sinusoidal four-step phase-shifted pattern imaging.

As shown and combined with FIG. 8 and formula (1), when t=0, the values of P₁~P₄ can correspond to Q/2, 0, Q/2 and Q respectively.

Assuming that the scanning cycle 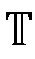 is 3.84ms, the image sensor includes 1920 columns and the linear light projection cycle t*ₚ* is 20ns, since the time each pixel is scanned by the linear light, that is, the dwell time t*_{c}* can be equal to the quotient of the scanning cycle 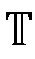 divided by the number of columns C, that is, 3.84ms/1920=2µs, or considering that the linear light has a certain width, the dwell time t*_{c}* is not less than 2µs, so each pixel column can complete 100 exposures in the 2µs of the linear light. In this case, *O*=100.

In one embodiment, the linear light can be made to maintain the waveform of Q₁=A/2, Q₂=Q₃=0, Q₄=A/2 corresponding to t=0 for the first 100 projection cycles t*ₚ* (here A=Q/O=Q/100) at the beginning of the current subcycle 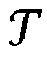 . In a preferred embodiment, based on the slight change of t, the values of Q₁~Q₄ can be fine-tuned in each projection cycle t*ₚ*, such as using the solution value of formula (2).

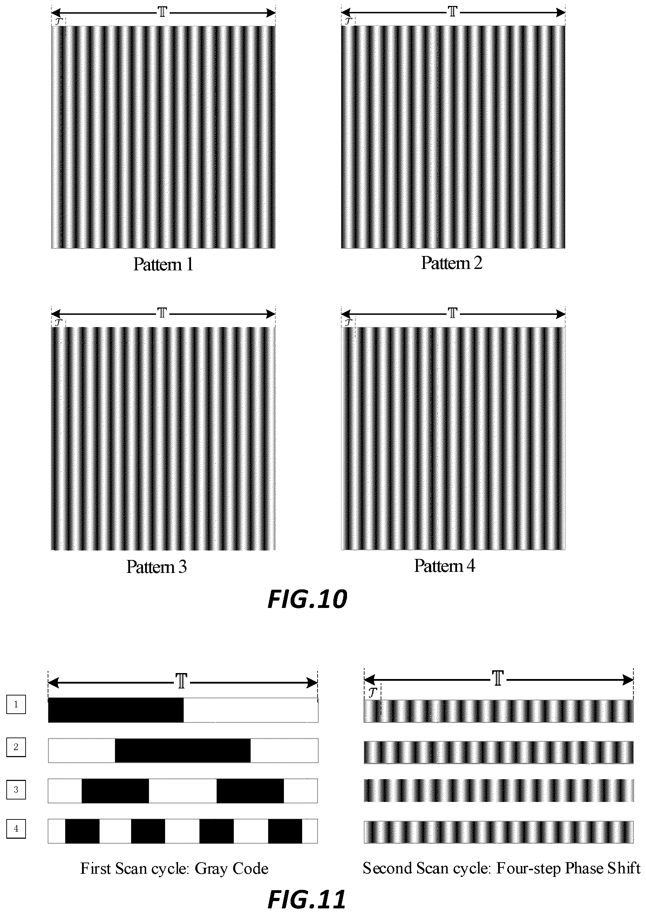

As mentioned above, the subcycle 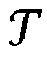 is repeated for a predetermined number of times, for example, M times, and thereby a scanning cycle 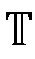 is completed. FIG. 10 illustrates an example of patterns 1-4 obtained from memory cell sets 1-4 respectively after completing a scanning cycle 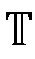 . For example, in the example of FIG. 10, M can be equal to 16, that is, the subcycle 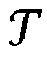 is repeated 16 times, thereby obtaining a four-step phase-shifted diagram with a phase difference of π/2. Obviously, FIG. 10 shows an example of sinusoidal four-step phase-shifted patterns. When the four-step phase-shifted diagram with 32 sinusoidal stripes shown in FIG. 10 is obtained using the image sensor with 1920 columns in the above example, each sinusoidal stripe covers 60 pixel columns (1920/32=60). In other words, 60*100=6000 projections are required to complete one subcycle 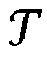 of linear light scanning. In the embodiment where the values of Q₁~Q₄ are fine-tuned in each projection cycle t*ₚ* based on the solution value of formula (2), each projection cycle t*ₚ* has a small increment of Δ*t*=2π/6000=π/3000 compared to the previous projection cycle t*ₚ*, which leads to different values.

Returning to FIG. 9, as the linear light scans from the position corresponding to t=0 to the position corresponding to *t*=π/6, the values of Q₁ to Q₄ can be solved based on formula (3), for example. At *t*=π/6, it can be considered that the linear light scans to the fifth pixel column among the 60 pixel columns of the current cycle, and based on formula (3), it is solved that Q₁=3A/4, Q₂=0, Q₃=0.183A, and Q₄=0.067A correspond to *t*=π/6.

As the linear light scans from the position corresponding to t =π/6 to the position corresponding to *t*=π/3, the values of Q₁ to Q₄ can continue to be solved. Since cost =sin t at t =π/4, and cost<sint in the process of π/4~3π/4, the formula (3) that Q₄<0 is no longer applicable, and the formula (4) can be used to solve that Q₁=3A/4, Q₂=0.183A, Q₃=0.067A, and Q₄=0 at t=π/3. And at t=π/3, it can be considered that the linear light scans to the 10th pixel column in the 60 pixel columns of the current cycle.

As the linear light scans from the position corresponding to *t*=π/3 to the position corresponding to *t*=π/2, the values of Q₁~ Q₄ can be solved based on formula (4). At *t*=π/2, it can be considered that the linear light scans to the 15th pixel column in the 60 pixel columns of the current cycle, and based on formula (4), it can be solved that Q₁=A/2, Q₂= A/2, Q₃=0, and Q₄=0 at t=π/2. It should be noted that since pixels 1-4 perform 4-step phase-shifted imaging, Q₁+ Q₂+ Q₃+ Q₄=A exists in each projection cycle t*ₚ*, and since pixels 1-4 are 2π/N phases apart from each other and are also exposed in the projection cycle t*ₚ* and the on time accounts for 10%, in each projection cycle t*ₚ*, pixels 1-4 can obtain a total integrated brightness of 2A* tₚ/4.

As described above, in conjunction with FIG. 9, the value examples of Q₁~ Q₄ in the first π/2 of a 2π cycle of the sine wave N-step phase-shifted diagram are described, with the imaging examples of pixels 1-4. Those skilled in the art can continue to obtain the value examples of Q₁~ Q₄ in the last 3π/2 of a 2π cycle based on formula (2) and the example of FIG. 9.

In addition, it should be understood that although subphases T*₁*-T*₄* are shown in FIG. 8 and FIG. 9 for the convenience of explaining the changes in the striped light image and the waveform (the subphases T*₁-*T*₄* respectively correspond to the 0~π/2 part, the π/2~π part, the π~3π/2 part and the 3π/2~2π part in a 2π subcycle 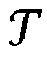 ), when realizing the above sinusoidal wave 4-step phase-shifted pattern, it is only necessary to calculate the change in the brightness value of the projected laser within a subcycle 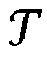 according to the above formula (2), and there is no need to additionally divide the subphases T*₁-*T*₄.*

In one embodiment, other striped lights and N-step phase-shifted imaging can be combined to obtain a more accurate depth image. FIG. 11 illustrates an example of depth map imaging using Gray code combined with four-step phase shift. In practical applications, the imaging accuracy of the depth map can be improved by including more repeating subcycles 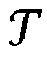 in each 4-step phase-shifted pattern. However, due to the cyclic repetition of the 4-step phase-shifted pattern, there is a problem of being unable to identify cross-cycle depth jumps. In this case, Gray code can be used to perform preliminary imaging of the subject in the capturing space, and then 4-step phase-shifted imaging can be performed. Specifically, the projection device can complete a pattern scan in the first scanning cycle 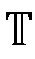 (for example, the corresponding waveform of each linear light projection cycle is solved by the illustrated light-dark diagram, so that each of the N memory cell sets of the image sensor images a different striped-light pattern, and the N striped-light patterns constitute a set of Gray code patterns. The projection device completes a pattern scan in the second scanning cycle 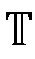 , so that each of the N memory cell sets of the image sensor images a different striped-light pattern, and the N striped-light patterns constitute the set of N-step phase-shifted patterns, wherein, based on the set of Gray code patterns, a depth map of the imaging area is generated from the set of N-step phase-shifted patterns.

In addition, when multiple scanning cycles 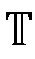 are introduced, not only other striped-light patterns plus N-step phase-shifted patterns can be implemented, but also αN-step phase-shifted patterns can be implemented. Here, α is an integer greater than or equal to 2. Specifically, the projection device completes α pattern scans within α scanning cycles 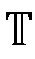 , each of the scanning cycle 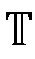 includes multiple repeating subcycles 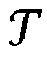 , each subcycle 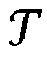 includes N subphases T*₁*-T*_{N}*, and in each subphase T*ᵢ*, the linear light is projected with brightness changes at the projection cycle t*ₚ*, the duration of the projection cycle t*ₚ* is the same as the duration of the exposure switch cycle t*ₑ*, and the projection cycle t*ₚ* includes a bright area, wherein, in the subphases T*₁*-T*_{N}*, the position of the bright area in the projection cycle t*ₚ* changes at an interval of 2π/αN phase, so that when a single pattern scan is completed within each scanning cycle 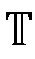 , the N memory cell sets of the image sensor each image a different striped-light pattern, and when α pattern scans are completed within α scanning cycles 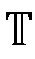 , αN stripe patterns constitute a set of αN step phase-shifted patterns with a 2π/αN phase-shifted between each other, wherein α is an integer greater than or equal to 2.

For ease of understanding, α=2, N=4 is used as an example. That is, an image sensor including 4 pixel sets exposed by exposure switch cycles t*ₑ* with a phase interval of 2π/N, and two scans are used to achieve the acquisition of an eight-step phase-shifted pattern.

In order to achieve the acquisition of the eight-step phase-shifted pattern using image sensors with 4 memory cell sets, the projection device needs to perform two scans. In the first scan, that is, in the first scanning cycle 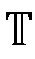 , multiple repeating subcycles 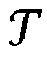 are included, and in each subcycle 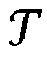 , 4 subphases T₁*-*T*₄* are included. The position of the bright area in the projection cycle t*ₚ* changes at intervals of π/4 phase, so that when a pattern scan is completed within the first scanning cycle 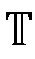 , the first 4 patterns in the eight-step phase-shifted pattern are obtained. In the second scan, that is, in the second scan cycle 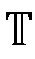 , it also includes multiple repeating subcycles 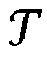 , and in each subcycle 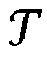 , it also includes N subphases T*₁-*T*₄*. The position of the bright area in the projection cycle t*ₚ* changes at intervals of π/4 phase (but the phase of the bright area is different from that in the first scan), so that when a pattern scan is completed in the second scan cycle 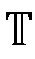 , the last four patterns in the eight-step phase-shifted pattern are obtained. Therefore, the eight-step phase-shifted pattern can be obtained through two scans, thereby achieving higher depth imaging accuracy.

In addition, although the example of N=4 is given above for the convenience of explanation, in other embodiments, N may also take other values. Specifically, N=2*ⁿ*, where *n is* an integer greater than or equal to 1. Thus, for example, a higher precision 8-step phase shift using an image sensor with 8 memory cell sets, a 16-step phase shift using an image sensor with 16 memory cell sets, etc. can be achieved.

The image sensor may include N pixel sets, corresponding to N memory cell sets. It may also be that the N memory cells included in each pixel of the image sensor are N charge memory cells, and the exposure positions of the N charge memory cells corresponding to the same pixel are the same, but the exposure cycles are phase-shifted 2π/N from each other, and when a pattern scan is completed within the scanning cycle 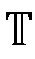 , the set of N-step phase-shifted patterns are obtained from the N charge memory cell sets, and the set of N-step phase-shifted patterns are used to generate a depth map of the imaging area.

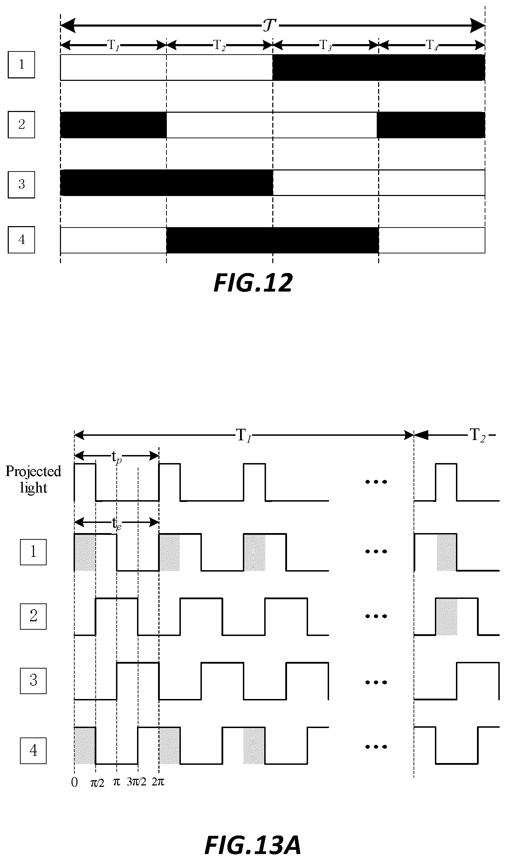

FIG. 12 shows a schematic diagram of imaging of different memory cell sets in a subcycle 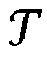 . In the example shown in FIG. 12, the desired phase-shifted pattern is a light and dark stripe waveform with a phase difference of π/2. In this case, the values of the four memory cell sets P₁~P₄ can be: $\begin{matrix}{P}_{1} = Q , when t = {0}^{∼} π ; = 0 , when t = {π}^{∼} 2 π \\ {P}_{2} = 0 , when t = {0}^{∼} π / 2 ; = Q , when t = π / {2}^{∼} 3 π / 2 ; = 0 , when t = 3 π / {2}^{∼} 2 π \\ {P}_{3} = 0 , when t = {0}^{∼} π ; = Q , when t = {π}^{∼} 2 π \\ {P}_{4} = Q , when t = {0}^{∼} π / 2 ; = 0 , when t = π / {2}^{∼} 3 π / 2 ; = Q , when t = 3 π / {2}^{∼} 2 π\end{matrix}$ (5)

So, based on formulas (1) and (5), solve Q₁~Q₄ and get an optimized solution as follows: $\begin{matrix}{Q}_{1} = A , when t = {0}^{∼} π / 2 ; = 0 , when t = π / {2}^{∼} 2 π \\ {Q}_{2} = 0 , when t = {0}^{∼} π / 2 ; = A , when t = π / {2}^{∼} π ; = 0 , when t = {π}^{∼} 2 π \\ {Q}_{3} = 0 , when t = {0}^{∼} π ; = A , when t = {π}^{∼} 3 π / 2 ; = 0 , when t = 3 π / {2}^{∼} 2 π \\ {Q}_{4} = 0 , when t = {0}^{∼} 3 π / 2 ; = A , when t = 3 π / {2}^{∼} 2 π\end{matrix}$ (6) Wherein, O*A=Q, O is, for example, the number of exposure cycles received by each pixel when the linear light is scanned.

In the optimization solution based on formula (6), each repeating subcycle 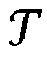 can be divided into 4 subphases T₁*-*T*₄,* and the subphases T*₁-*T*₄* each corresponds to the 0~π/2 part, π/2~π part, π~3π/2 part and 3π/2~2π part of a 2π subcycle T, and the position of the bright area in the projection cycle t*ₚ* changes at intervals of 2π/4 phase.

In the example of N=4, each subcycle 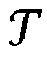 includes 4 subphases T*₁-*T*₄.* FIGS. 13A-D illustrates the relative relationship between the projected light waveform of subphases T*₁-*T*₄* and the exposure cycle of memory cell sets 1-4.

As shown, the projected laser is projected with a projection cycle t*ₚ* of the same length as the exposure switch cycle t*ₑ*, and it can be considered that each laser projection cycle t*ₚ* is always synchronized with the exposure switch cycle t*ₑ* of the first memory cell set (although the laser projection cycle t*ₚ* will be turned on at different phases in different subphases), and is switched at a duty cycle of 25% (i.e., the bright area is 2π/N), that is, the waveform is a rectangular wave with a duty cycle of 25%. In the four subphases T*₁-*T*₄,* the projection start time of the projection laser in each projection cycle t*ₚ* is respectively aligned with the exposure start time of the 1st to 4th memory cell sets.

Specifically, first, as shown in FIG. 13A, in subphase T*₁*, the projection laser remains on in the first π/2 phase of each projection cycle t*ₚ*. In this case, since the first memory cell set and the fourth memory cell set are also turned on, the reflected projected light can be exposed in the first π/2 phase of each projection cycle t*ₚ*, so that charge accumulation can be performed in the corresponding memory cell, as shown in the gray rectangle. After completing the projection of the predetermined m*₁* cycles, subphase T*₁* ends and enters subphase T₂ in which the projection laser remains on in the n/2~π phase of each projection cycle t*ₚ*.

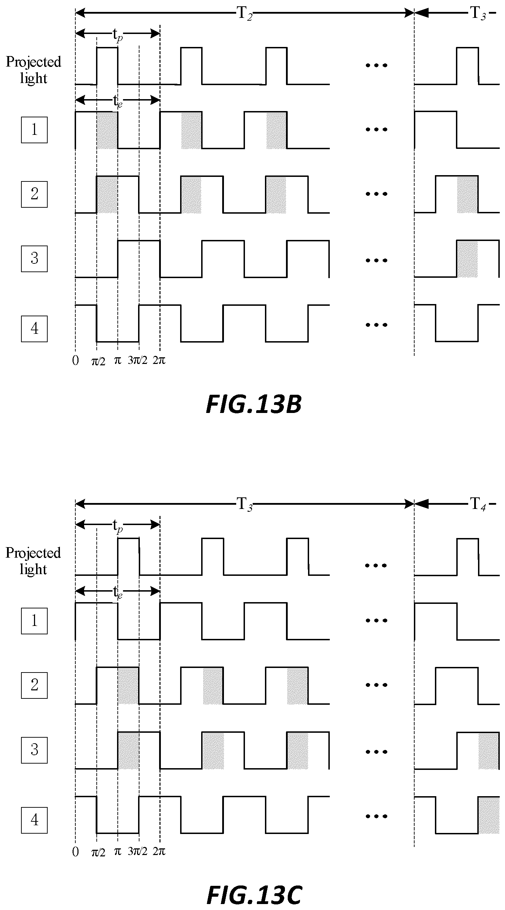

As shown in FIG. 13B, in subphase T*₂*, the projection laser remains on in the π/2~π phase of each projection cycle t*ₚ*. In this case, since the first memory cell set and the second memory cell set are also turned on, the reflected projected light can be exposed in the π/2~π phase of each projection cycle t*ₚ*, so that charge accumulation can exist in the corresponding memory cell, as shown in the gray rectangle. After completing the predetermined m*₂* cycles of projection, subphase T*₂* ends, and enters subphase T₃ in which the projection laser remains on within the π~3π/2 phase of each projection cycle t*ₚ*.

As shown in FIG. 13C, in subcycle T₃, the projection laser remains on within the π~3π/2 phase of each projection cycle t*ₚ*. In this case, since the second memory cell set and the third memory cell set are also turned on, the reflected projected light can be exposed within the π~3π/2 phase of each projection cycle t*ₚ*, so that charge accumulation can exist in the corresponding pixel, as shown in the gray rectangle in the figure. After completing the predetermined m₃ cycles of projection, subphase T₃ ends, and enters subphase T₄ in which the projection laser remains on within the 3π/2~2π phase of each projection cycle t*ₚ*.

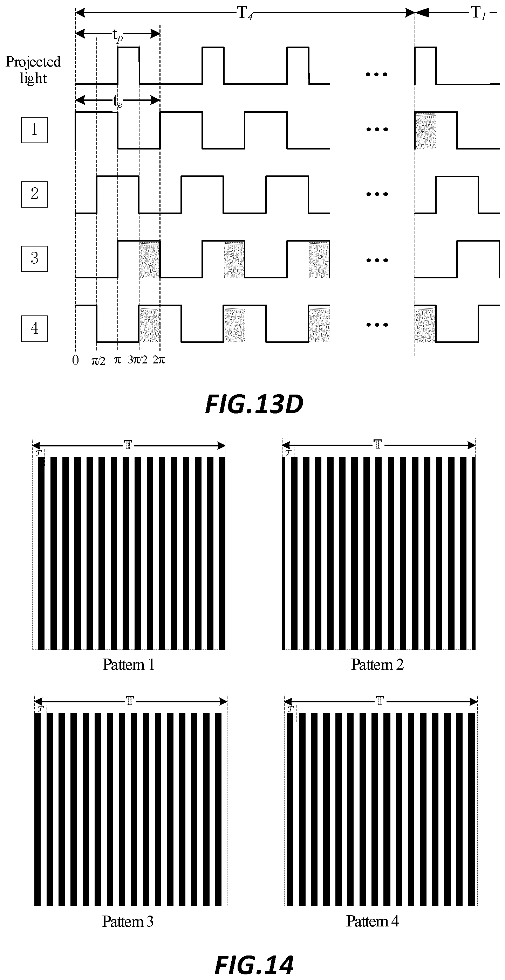

As shown in FIG. 13D, in subphase T₄, the projection laser remains on within the 3π/2~2π phase of each projection cycle t*ₚ*. In this case, since the third memory cell set and the fourth memory cell set are also turned on, the reflected projected light can be exposed within the 3π/2~2π phase of each projection cycle t*ₚ*, so that charge accumulation can exist in the corresponding pixel, as shown in the gray rectangle. After completing the projection of the predetermined m₄ cycles, subphase T₄ ends. In this case, the projection of a subcycle 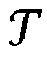 is completed, and the subphase T₁ of the next subcycle 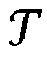 is entered.

In a simple implementation, the number of projection cycles of each subphase can be made the same, that is, m₁=m₂=m₃=m₄, that is, the duration of T₁-T₄ is the same. In this case, if the linear light scans the imaging plane at a uniform speed, the phase-shifted diagram shown in FIG. 12 can be obtained. As shown in FIGS. 13A-D, in subphase T₁, the lighting interval of the projected laser falls within the exposure interval of the first memory cell set and the fourth memory cell set, so the first memory cell set and the fourth memory cell set correspond to bright lines; in subphase T₂, the lighting interval of the projected laser falls within the exposure interval of the first memory cell set and the second memory cell set, so the first memory cell set and the second memory cell set correspond to bright lines; in subphase T₃, the lighting interval of the projected laser falls within the exposure interval of the second memory cell set and the third memory cell set, so the second memory cell set and the third memory cell set correspond to bright lines; in subphase T₄, the lighting interval of the projected laser falls within the exposure interval of the third memory cell set and the fourth memory cell set, so the third memory cell set and the fourth memory cell set correspond to bright lines. Repeat the above subphase 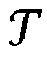 for a predetermined number of times, for example, M times, and thereby complete a scanning cycle 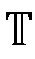 . FIG. 14 illustrates patterns 1-4 obtained from memory cell sets 1-4 after completing a scanning cycle 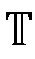 . For example, in the example of FIG. 14, M can be equal to 16, that is, the subcycle 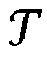 is repeated 16 times, thereby obtaining a four-step phase-shifted diagram of light and dark stripes with a phase difference of π/2.

Therefore, when obtaining the N-step phase-shifted diagram of light and dark stripes, each subcycle 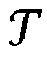 includes N subphases T₁-T_{N}, and in each subphase Tᵢ, the linear light changes brightness with a projection cycle t*ₚ*, the duration of the projection cycle t*ₚ* is the same as the duration of the exposure switch cycle t*ₑ*, and the projection cycle t*ₚ* includes a bright area, wherein in the subphases T₁-T_{N}, the position of the bright area in the projection cycle t*ₚ* changes at an interval of 2π/N phase, thereby enabling the N memory cell sets of the image sensor to image a different striped-light pattern when a pattern scan is completed within the scanning cycle 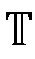 , and there is a phase shift of 2π/N between the N striped-light patterns. Thus, through one scan of the linear light, for example, from left to right (corresponding to one scanning cycle 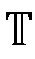 ), a set of N-step phase-shifted patterns can be directly obtained from N memory cell sets of the image sensor.

The dwell time t*_{c}* corresponding to the linear light scanning on each column of pixels is not less than the quotient of the scanning cycle 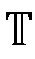 divided by the number of columns C. In order to ensure sufficient exposure, the dwell time t*_{c}* is more than 10 times the projection cycle t*ₚ*, and preferably, the dwell time t*_{c}* is more than 50 times the projection cycle t*ₚ*. For example, assuming that the scanning cycle 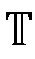 is 3.84ms (i.e., the frame rate is 1000/3.84≈260 frames/s), when the image sensor includes 1920 columns (in the case of the pixel unit shown in FIG. 6 , there are 960 columns of pixel units) of pixels, the time for each pixel to be scanned by the linear light, i.e., the dwell time tc, can be equal to the scanning cycle 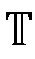 divided by the number of columns C, i.e., 3.84ms/1920=2µs, or, considering that the linear light has a certain width, the dwell time t*_{c}* is not less than 2µs. When the linear light projection cycle t*ₚ* is 20ns and the duty cycle is 25%, each pixel column can complete 100 exposures in the 2µs when the linear light scans, and the two memory cell sets corresponding to the bright area position of the current projection cycle t*ₚ* can achieve an exposure of 5ns x 100 = 0.5µs. In addition, since the time for the linear light to scan through a column of pixels is long enough compared to the exposure cycle of the pixels (for example, 100 times of the above example), for the currently irradiated pixel column, it can be approximately considered that the linear light itself is a light source whose position has not moved in these 2µs.

In order to achieve four-step phase shift, the duration of each subphase T*ᵢ* must be no less than the time for the linear light to scan through a pixel unit column. When using the image sensor with 1920 columns in the above example to obtain the four-step phase-shifted diagram with 32 stripes (16 bright stripes and 16 dark stripes) shown in FIG. 10, each stripe covers 60 pixel columns (1920/32=60). As shown in FIG. 9, since each subphase T*ᵢ* corresponds to half a stripe, it covers 30 pixel columns and lasts for 2µs x 30 = 60µs. Therefore, in this example, m₁=m₂=m₃=m₄=m=60us/20ns=3000. Since the linear light projection cycle t*ₚ* is the same as the exposure switch cycle t*ₑ* of each memory cell set, when the linear light scans through the distance of half a stripe, the corresponding memory cell sets have also been switched 3000 times.

As shown above, in combination with FIG. 12 to FIG. 14, an example is given in which the projected linear light is a rectangular wave with a projection cycle t*ₚ* and a bright area with a 2π/N phase. In this example, the projected linear light is always a rectangular wave with a projection cycle t*ₚ* and a duty cycle of 100/N % (in the above example with N=4, the duty cycle is 25%, corresponding to a bright area with a 2π/N phase), and the projected light intensity of the bright area in each different projection cycle t*ₚ* are preferably the same. In each subphase T*ᵢ*, the projection waveform of the linear light in each projection cycle t*ₚ* is the same, and is a rectangular wave with a 2π/N phase bright area and a 6π/N phase dark area (for example, in each projection cycle t*ₚ*, the laser is turned on within t*ₚ*/N time and turned off within (N-1)*t*ₚ*/N time). Between successive subphases, the projection cycle of the linear light and the ratio of the bright area to the dark area remain unchanged, only the position of the bright area changes. And it is repeated in multiple repeating subcycles 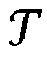 that constitute a scanning cycle 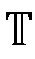 . Thus, a set of N-step phase-shifted patterns obtained is a striped-light pattern with obvious distinction between bright and dark areas and repeated multiple times as shown in FIG. 14.

The above embodiment of obtaining the light and dark stripes shown in FIG. 14 based on a rectangular wave with a duty cycle of 100/N % and constant brightness can be regarded as a special case of the imaging solution of the present invention based on the linear light projection cycle t*ₚ*, each 2π/N phase is individually adjustable and thus combined with an image sensor with a phase difference of 2π/N and an exposure cycle also equal to t*ₚ* to generate a set of N-step phase-shifted patterns.

The projection and imaging solution of the present invention can be used for a monocular solution (i.e., a solution equipped with one image sensor) or a binocular solution (i.e., a solution equipped with two image sensors with fixed relative positions for synchronous imaging). When the image sensor includes a first image sensor and a second image sensor with fixed relative positions, the first image sensor and the second image sensor can each include the N memory cell sets and be exposed synchronously with each other. In other words, in the binocular solution, when a pattern scan is completed within the scanning cycle 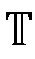 , the first image sensor can obtain N striped light images, the second image sensor can obtain N striped light images, and these 2N striped light images can be used to obtain depth data.

Further, in order to realize scanning projection, the projection device of the present invention includes: a light emitting device for generating linear light; and a reflecting device for reflecting the linear light, projecting the linear light moving in the vertical direction of the stripe direction to the capturing area at a predetermined frequency, the length direction of the linear light is the length direction of the projected stripe, and the reflecting device includes one of the following: a mechanical galvanometer that reciprocates at the predetermined frequency; a micromirror device that reciprocates at the predetermined frequency; and a mechanical rotating mirror that rotates unidirectionally at the predetermined frequency. Here, the projected linear light can be a linear light with a high-order Gaussian or flat-top Gaussian distribution, thereby providing a highly consistent brightness distribution in the width direction of the linear light.

The present invention also discloses a measuring device using the above-mentioned measuring head. Specifically, a depth data measuring device can include the depth data measuring head as described above, and a processor connected to the depth data measuring head, which is configured to obtain a depth map of the imaging area from the N striped-light patterns obtained when a pattern scan is completed within the scanning cycle 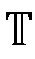 . In the binocular solution, the processor can determine the depth data of the object in the capturing area according to the predetermined relative positions of the first and second image sensors and the N first two-dimensional image frames and the N second two-dimensional image frames obtained by imaging the structured light. In different embodiments, the measuring head can have a relatively independent package, or it can be packaged in the measuring device together with the processor.

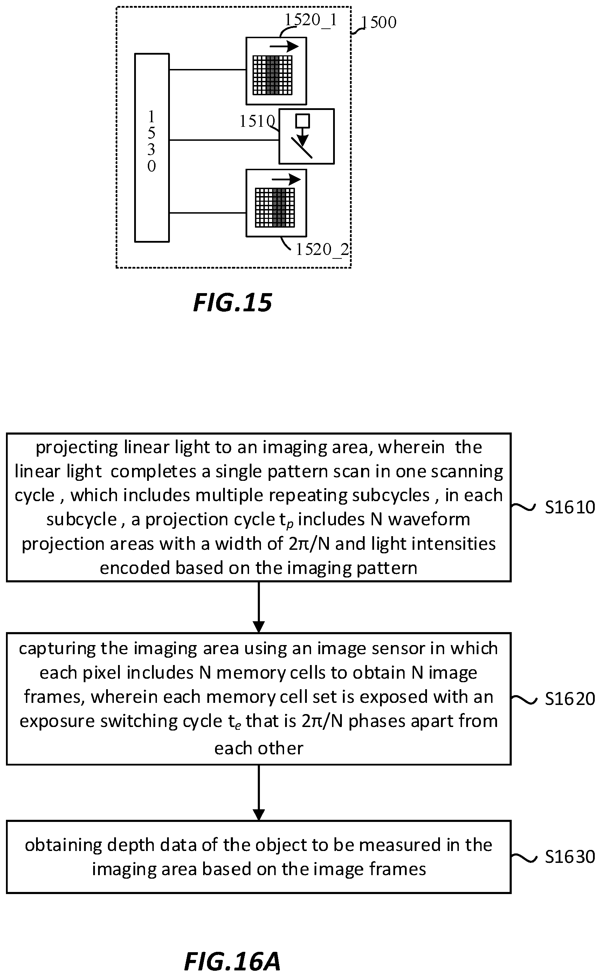

FIG. 15 illustrates a schematic diagram of a depth data measuring device according to an embodiment of the present invention. As shown, the measuring device 1500 may include a measuring head as described above and a processor 1530. The measuring head includes a projection device 1510 and two image sensors 1520.

The processor 1530 is connected to the measuring head, for example, to each of the projection device 1510 and the two image sensors 1520, and is configured to determine the depth data of the shooting object in the capturing area according to the predetermined relative positions of the first and second image sensors 1520_1 and 1520_2 and the N first two-dimensional image frames and N second two-dimensional image frames obtained by imaging the structured light.

FIGS. 16A-B illustrates schematic flow charts of a depth data measuring method according to embodiments of the present invention. The method can be implemented by the depth data measuring head and the measuring device of the present invention.

FIG. 16A illustrates a method performed by an image sensor including N memory cells for each pixel.

In step S1610, projecting linear light that moves in a first direction to an imaging area, wherein the length of the linear light is in a second direction perpendicular to the first direction, linear light projection completes a single pattern scan in one scanning cycle 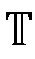 , which includes multiple repeating subcycles 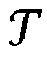 , in each subcycle 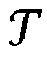 , the linear light changes brightness with a projection cycle t*ₚ*, which has the same duration as the exposure switch cycle t*ₑ*, The projection cycle t*ₚ* includes N waveform projection areas, each with a width of 2π/N, where the light intensity in each waveform projection area is encoded, where N is an integer greater than 1.

In step S1620, capturing the imaging area using an image sensor in which each pixel includes N memory cells to obtain N image frames under the linear light scanning projection, wherein the N memory cells of each pixel each belong to one of N memory cell sets, and each memory cell set is exposed with an exposure switching cycle t*ₑ* that is 2π/N phases apart from each other.

In step S1630, obtaining depth data of the object to be measured in the imaging area based on the image frames.

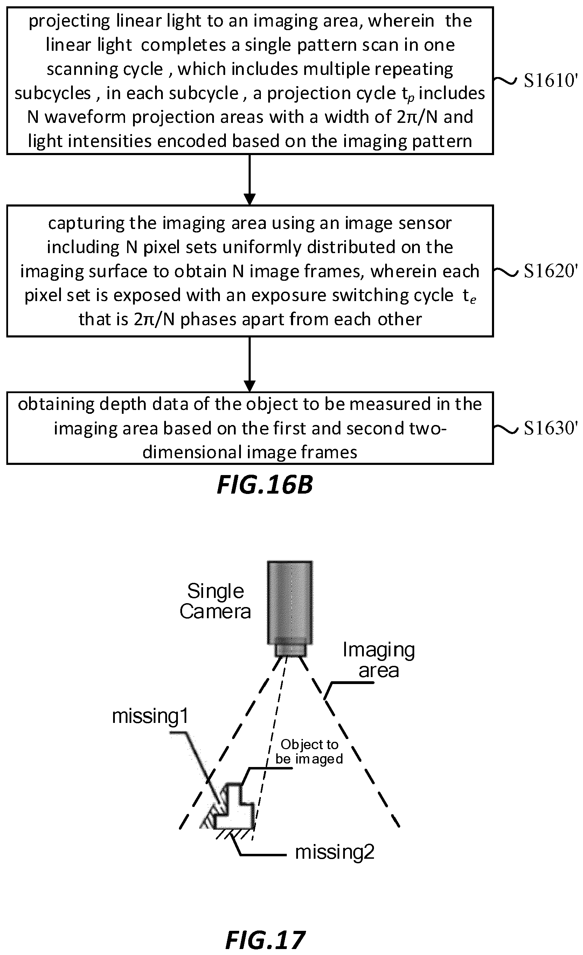

FIG. 16B illustrates a method performed by an image sensor including N memory cell sets corresponding to N pixel sets.

In step S1610', projecting linear light to an imaging area, wherein the linear light projection completes a single pattern scan in one scanning cycle 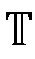 , which includes multiple repeating subcycles 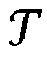 , in each subcycle 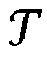 , the projection cycle t*ₚ* includes N waveform projection areas with a width of 2π/N and light intensity encoded based on the imaging pattern.

In step S1620', capturing the imaging area using an image sensor including N pixel sets uniformly distributed on the imaging surface to obtain N image frames, wherein each pixel set is exposed with an exposure switching cycle t*ₑ* that is 2π/N phases apart from each other.

In step S1630', obtaining depth data of the object to be measured in the imaging area based on the first and second two-dimensional image frames.

Regardless of the storage solution, the projected light intensity of each waveform projection area is encoded so that when a pattern scan is completed within the scanning cycle 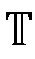 , each of the N memory cell sets of the image sensor images a different striped-light pattern, and the N striped-light patterns constitute a set of N-step phase-shifted patterns with a 2π/N phase shift between each other.

Furthermore, when imaging using actively projected structured light, problems with shadows and blind spots may occur. FIG. 17 shows an example of partial depth information missing of an object to be imaged when a single camera uses structured light for imaging. As shown, due to the uneven structure of the object to be imaged itself, this unevenness will block part of the object's structure from receiving structured light, thereby causing a shadow in the range of the object to be imaged facing the camera, and the lack of structured light illumination in the shadow part causes the lack of depth information of the corresponding part when obtaining the depth information (corresponding to "missing 1" in the figure). Regardless of the structure of the object to be imaged itself, the part of the object to be imaged facing away from the structured light generator cannot receive the illumination of the structured light, resulting in the lack of depth information of the corresponding part when obtaining the depth information (corresponding to "missing 2" in the figure).

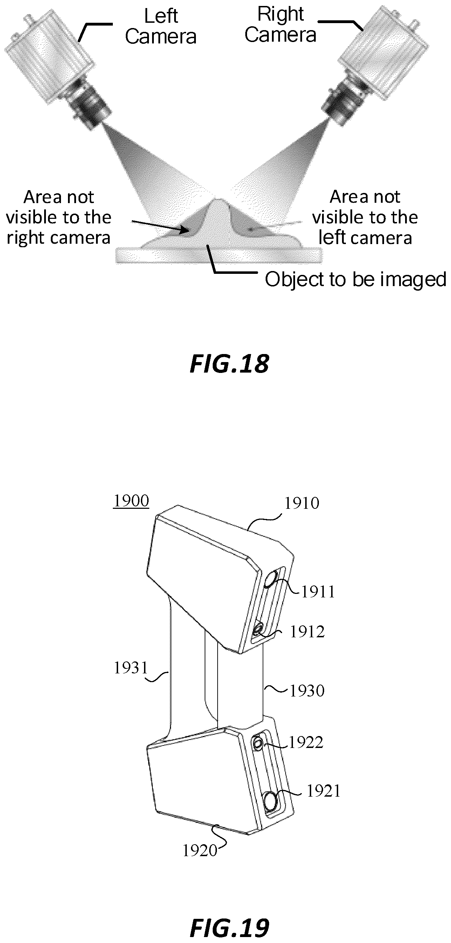

FIG. 18 shows an example of using dual-camera imaging to improve partial depth information missing of the object to be imaged. As shown, by setting up the left and right cameras, more parts of the object to be imaged can be illuminated by structured light, thereby achieving measurement of more depth information of the object to be imaged.

In view of this, the present invention can be implemented as a depth data measuring device with dual cameras (i.e., dual measuring heads). FIG. 19 shows a schematic diagram of a depth data measuring device according to an embodiment of the present invention. As shown, the depth data measuring device 1900 may include a first depth imaging measuring head 1910 and a second depth imaging measuring head 1920 whose relative positions are fixed. Specifically, the first depth imaging measuring head 1910 and the second depth imaging measuring head 1920 may be installed in the same housing, thereby ensuring the fixation of the relative positions.

Further, the measuring head 1910 and the measuring head 1920 may perform sequential structured light projection and imaging under the control of the same control device (e.g., a processor, not shown in the figure). Here, sequentially means that the measuring head 1910 first performs a scan and imaging, and the measuring head 1920 performs another scan and imaging, and each performs linear light projection and imaging in different time periods. Since the exposure cycle of each measuring head is shorter than the framing time of depth detection (for example, the exposure cycle of a frame of depth is 5ms, and the depth detection frame rate is 30fps, then the interval of each frame of depth is about 28ms), the exposure of other measuring heads can be performed in the exposure interval of the current measuring head, and exposure imaging and depth calculation are performed alternately. In other words, the depth data measuring device of the present invention may include the two measuring heads as described above, or may include more measuring heads that perform exposure imaging and depth calculation alternately, and the imaging information of these measuring heads may be stitched together in the same xyz axis space. Due to the use of inter-frame interleaving detection, the system frame rate detection frame rate is not affected, and the depth detection frame rate can still reach 30fps.

As shown, measuring head 1910 and measuring head 1920 can have the same configuration, for example, both can be two measuring heads with exactly the same configuration, and are configured to successively capture the same imaging area (object to be imaged in the imaging area) from different angles. Measuring head 1910 and measuring head 1920 can be implemented as a measuring head including N memory cell sets and capable of completing N images in a single scan as described above.

Here, sequential capturing means that after the measuring head 1910 completes the first pattern scanning (the projection device 1911 performs scanning and projection of linear light, and the image sensor 1912 performs imaging of the projected linear light), the measuring head 1920 performs the second pattern scanning (the projection device 1921 performs scanning and projection of linear light, and the image sensor 1922 performs imaging of the projected linear light), and the first set of N-step phase-shifted patterns obtained by the first pattern scanning and the second set of N-step phase-shifted patterns obtained by the second pattern scanning are synthesized into the depth information of the object to be imaged in the imaging area based on the relative position.

Further, the housing of the depth data measuring device 1900 may also include a handle 1931 structure, and may be implemented as a handheld modeling device. In this implementation, the depth data measuring device capture multiple sets of first set N-step phase-shifted patterns and multiple sets of second set N-step phase-shifted patterns that are in relative motion with respect to the object to be imaged, and may synthesize the depth information generated from the multiple sets of first set N-step phase-shifted patterns and multiple sets of second set N-step phase-shifted patterns into the model information of the object to be imaged based on the calibration point.

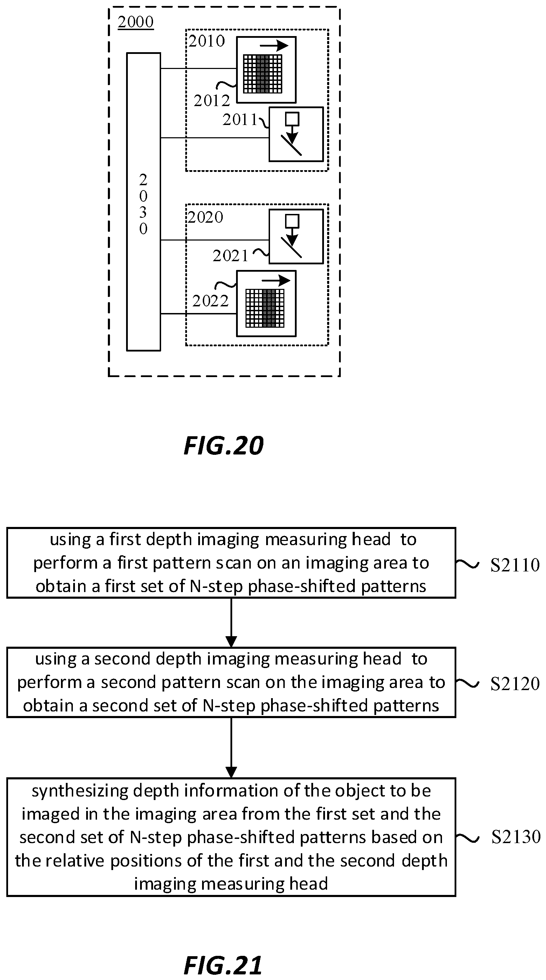

FIG. 20 illustrates a schematic diagram of a depth data measuring device according to an embodiment of the present invention. As shown, the measuring device 2000 may include two measuring heads 2010 and 2020 as described above, and a processor 2030. The measuring head 2010 includes a projection device 2011 and an image sensor 2012. The measuring head 2020 includes a projection device 2021 and an image sensor 2022.

The processor 2030 is connected to the two measuring heads, for example, to the projection device 2011 and the image sensor 2012, and to the projection device 2021 and the image sensor 2022. The projection device 2011 may perform a scanning projection as described above under the control of the processor 2030, and the N memory cell sets of the image sensor 2012 perform corresponding imaging, thereby obtaining a set of N-step phase-shifted images after a scanning projection. Subsequently, the projection device 2021 may perform a scanning projection as described above under the control of the processor 2030, and the N memory cell sets of the image sensor 2022 perform corresponding imaging, thereby obtaining a set of N-step phase-shifted images after a scanning projection. The two sets of N-step phase-shifted images can each be used to synthesize a depth map of the object to be imaged, and the two depth maps can be stitched together based on the positional relationship of the two measuring heads, thereby obtaining more comprehensive data of the object to be imaged.

FIG. 21 illustrates a schematic flow chart of a depth data measuring method according to an embodiment of the present invention. The method can be implemented by the depth data measuring device of the present invention.

In step S2110, using a first depth imaging measuring head of a depth data measuring device to perform a first pattern scan on an imaging area to obtain a first set of N-step phase-shifted patterns.

In step S2120, using a second depth imaging measuring head of the depth data measuring device to perform a second pattern scan on the imaging area to obtain a second set of N-step phase-shifted patterns.

In step S2130, synthesizing depth information of the object to be imaged in the imaging area from the first set of N-step phase-shifted patterns and the second set of N-step phase-shifted patterns based on the relative positions of the first depth imaging measuring head and the second depth imaging measuring head.

The scanning imaging of the first depth imaging measuring head and the second depth imaging measuring head each include: projecting linear light that moves in a first direction to the imaging area, wherein the length of the linear light is in a second direction perpendicular to the first direction, linear light projection completes the single pattern scan in one scanning cycle 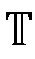 , which includes multiple repeating subcycles 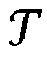 , in each subcycle 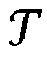 , the linear light changes brightness with a projection cycle t*ₚ*, which has the same duration as the exposure switch cycle t*ₑ*, the projection cycle t*ₚ* includes N waveform projection areas, each with a width of 2π/N, where the light intensity in each waveform projection area is encoded, where N is an integer greater than 1; capturing the imaging area using an image sensor including N memory cell sets uniformly distributed on a imaging surface to obtain N image frames under the linear light scanning projection, each memory cell set exposed in an exposure switch cycle t*ₑ* that is phase-shifted by 2π/N relative to each other; and obtaining depth data of the object to be measured in the imaging area based on the image frames. The light intensity in each waveform projection area is encoded such that, during a single pattern scan within the scanning cycle 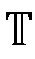 , the N memory cell sets in the image sensor each capture a different striped-light pattern, the N striped-light patterns form a set of N-step phase-shifted patterns, each having a phase-shifted of 2π/N relative to the others.

The above steps S1910 to S1930 can be repeated to perform dynamic imaging of, for example, a moving imaging object. In this case, the depth data measuring device of the present invention can maintain a constant position.

In another embodiment, the depth data measuring device of the present invention can actively change its position. As shown in the previous FIG. 19, the depth data measuring device of the present invention can be implemented as a handheld device including a handle 1931. In this implementation, the depth data measuring device captures multiple sets of first set N-step phase-shifted patterns and multiple sets of second set N-step phase-shifted patterns that are in relative motion with respect to the object to be imaged, and can synthesize the depth information generated from the multiple sets of first set N-step phase-shifted patterns and multiple sets of second set N-step phase-shifted patterns into the model information of the object to be imaged based on the calibration point.

The depth data measuring head, measuring device and measuring method according to the present invention have been described in detail above with reference to the accompanying drawings. The depth data measurement solution of the present invention uses an image sensor with different sets of pixels capable of phase-shifted exposure to image the projected phase-shifted linear light, so that in a single scan of the linear light, different sets of pixels of the image sensor can each obtain different phase-shifted striped light images, thereby achieving the acquisition of multiple striped light images in a single linear light scan. Thus, the synthesis speed of the depth map can be greatly improved, and it is suitable for capturing moving target objects.

The flowchart and block diagrams in the figures illustrate the architecture, functionality, and operation of possible implementations of systems and methods according to various embodiments of the present disclosure. In this regard, each block in a flowchart or block diagram may represent a module, program segment, or part of code that includes one or more Executable instructions. It should also be noted that, in some alternative implementations, the functions noted in the block may occur out of the order noted in the figures. For example, two blocks in succession may, in fact, be executed substantially concurrently, or they may sometimes be executed in the reverse order, depending upon the functionality involved. It should also be noted that each block of the block diagrams and/or flowchart illustrations, and combinations of blocks in the block diagrams and/or flowchart illustrations, can be implemented by a dedicated hardware-based system that performs the specified functions or operations, or may be implemented by a combination of dedicated hardware and computer instructions.

Having described various embodiments of the present disclosure, the foregoing description is exemplary, not exhaustive, and is not limited to the disclosed embodiments. Many modifications and alterations will be apparent to those of ordinary skill in the art without departing from the scope of the described embodiments. The scope of the invention is defined by the claims. The terminology used herein is chosen to best explain the principle of each embodiment, practical application or improvement of technology in the market, or to enable other ordinary skilled in the art to understand each embodiment disclosed herein.

## Claims

1. A depth data measuring head (300), comprising:
a projection device (310) for projecting linear light that moves in a first direction to an imaging area, wherein the length of the linear light is in a second direction perpendicular to the first direction;
an image sensor including N memory cell sets, each memory cell set exposed in an exposure switch cycle t*ₑ* that is phase-shifted by 2π/N relative to each other, where N is an integer greater than 1,
wherein the projection device completes a single pattern scan within a scanning cycle 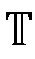 , which includes multiple repeating subcycles 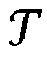 , in each subcycle 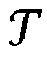 , the linear light changes brightness with a projection cycle t*ₚ*, which has the same duration as the exposure switch cycle t*ₑ*, the projection cycle t*ₚ* includes N waveform projection areas, each with a width of 2π/N, where the light intensity in each waveform projection area is encoded such that when a single pattern scan is completed within the scanning cycle 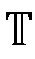 , the N memory cell sets in the image sensor each capture a different striped-light pattern, the N striped-light patterns form a set of N-step phase-shifted patterns, each having a phase-shifted of 2π/N relative to the others, wherein N=2*ⁿ*, and n is an integer greater than or equal to 1.

2. The depth data measuring head according to claim 1, wherein each waveform projection area corresponds to a projected rectangular wave with a width of 2π/N or 0, and based on the light intensity distribution of the set of N-step phase-shifted patterns corresponding to the subphase 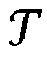 , the light intensity of each waveform projection area is determined.

3. The depth data measuring head according to claim 2, wherein the set of N-step phase-shifted patterns is a sine wave four-step phase-shifted pattern, and the light intensity value of each waveform projection area in each projection cycle t*ₚ* is obtained based on the exposure of N memory cell sets corresponding to the waveform projection area, wherein the light intensity value is not less than zero.

4. The depth data measuring head according to claim 1, wherein the dwell time t*_{c}* corresponding to the linear light scanning on each column of pixels is not less than the quotient of the scanning cycle 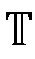 divided by the number of columns C, and the dwell time t*_{c}* is more than 10 times the projection cycle t*ₚ*.

5. The depth data measuring head according to claim 3, wherein in each subphase T*ᵢ*, the linear light is projected m times with the projection cycle t*ₚ*, and the duration of each subphase T*ᵢ* is greater than the dwell time t*_{c}*.

6. The depth data measuring head according to claim 1, wherein each pixel in the image sensor includes N memory cells, and each of the N memory cells of a pixel belongs to one of the N memory cell sets, and the N memory cells included in each pixel are N charge memory cells, and the exposure positions of the N charge memory cells corresponding to one pixel are the same, but the exposure cycles are phase-shifted 2π/N from each other, and
when a single pattern scan is completed within the scanning cycle 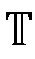 , the set of N-step phase-shifted patterns are obtained from the N sets of charge memory cells, and the set of N-step phase-shifted patterns is used to generate one depth map of the imaging area.

7. The depth data measuring head according to claim 1, wherein the image sensor includes N sets of uniformly distributed pixels on the imaging surface, each pixel having one corresponding memory cell, when a single pattern scan is completed within the scanning cycle 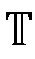 , the set of N-step phase-shifted patterns is obtained from the N memory cell sets corresponding to the N pixel sets, and the set of N-step phase-shifted patterns is used to generate one depth map of the imaging area.

8. The depth data measuring head according to claim 1, wherein the projection device completes a single pattern scan in a first scanning cycle 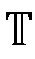 such that the N memory cell sets in the image sensor each capture a different striped-light pattern, and the N striped-light patterns form a set of Gray code patterns,
the projection device completes another single pattern scan in a second scanning cycle 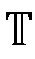 , such that the N memory cell sets each capture a different striped-light pattern, and the N striped-light patterns form the set of N-step phase-shifted pattern,
wherein based on the set of Gray code patterns, one depth map of the imaging area is generated from the set of N-step phase-shifted patterns.

9. The depth data measuring head according to claim 1, wherein the image sensor includes a first image sensor (320_1) and a second image sensor (320_2) whose relative positions are fixed, wherein the first image sensor and the second image sensor each include the N memory cell sets and are exposed synchronously with each other.

10. The depth data measuring head according to claim 1, wherein the projection device completes α pattern scans within α scanning cycles 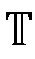 , each of the scanning cycle 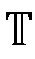 includes multiple repeating subcycles 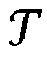 , each subcycle 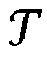 includes N subphases T*₁*-T*_{N}*, and in each subphase T*ᵢ*, the linear light is projected with brightness changes at the projection cycle t*ₚ*, the duration of the projection cycle t*ₚ* is the same as the duration of the exposure switch cycle t*ₑ*, and the projection cycle t*ₚ* includes a bright area, wherein, in the subphases T*₁*-T*_{N}*, the position of the bright area in the projection cycle t*ₚ* changes at an interval of 2π/αN phase, so that when a single pattern scan is completed within each scanning cycle 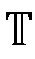 , the N memory cell sets of the image sensor each image a different striped-light pattern, and when α pattern scans are completed within α scanning cycles 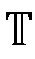 , αN striped light patterns constitute a set of αN step phase-shifted patterns with a 2π/αN phase-shifted between each other, wherein α is an integer greater than or equal to 2.

11. The depth data measuring head according to claim 1, wherein each subcycle 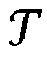 includes N subphases T*₁*-T*_{N}*, and in each subphase T*ᵢ*, the linear light is projected with brightness changes at the projection cycle t*ₚ*, the duration of the projection cycle t*ₚ* is the same as the duration of the exposure switch cycle t*ₑ*, and the projection cycle t*ₚ* includes a bright area, wherein, in the subphases T*₁*-T*_{N}*, the position of the bright area in the projection cycle t*ₚ* changes at an interval of 2π/N phase, so that when a single pattern scan is completed within each scanning cycle 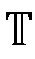 , the N memory cell sets of the image sensor each image a different striped-light pattern, and the N striped-light patterns constitute the set of N-step phase-shifted patterns with a 2π/N phase-shifted between each other.

12. A depth data measuring device (1500), comprising:
a depth data measuring head as claimed in any one of claims 1-11; and
a processor (1530) connected to the depth data measuring head, configured to obtain one depth map of the imaging area from the obtained N striped-light patterns when completing a single pattern scan within the scanning cycle 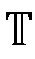 .

13. A depth data measuring device (1900), comprising: a first depth imaging measuring head (1910) and a second depth imaging measuring head (1920) whose relative positions are fixed, and the first depth imaging measuring head and the second depth imaging measuring head are the depth data measuring heads as claimed in any one of claims 1-11,
wherein after the first depth imaging measuring head completes a first pattern scan, the second depth imaging measuring head performs a second pattern scan, and a first set of N-step phase-shifted patterns obtained by the first pattern scan and a second set of N-step phase-shifted patterns obtained by the second pattern scan are synthesized into depth information of an object to be imaged in an imaging area based on the relative position.

14. A depth data measuring method, comprising:
projecting linear light that moves in a first direction to an imaging area, wherein the length of the linear light is in a second direction perpendicular to the first direction, linear light projection completes a single pattern scan in one scanning cycle 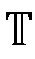 , which includes multiple repeating subcycles 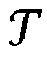 , in each subcycle 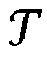 , the linear light changes brightness with a projection cycle t*ₚ*, which has the same duration as the exposure switch cycle t*ₑ*, the projection cycle t*ₚ* includes N waveform projection areas, each with a width of 2π/N, where the light intensity in each waveform projection area is encoded, where N is an integer greater than 1;
capturing the imaging area using an image sensor including N memory cell sets to obtain N image frames under the linear light scanning projection, each memory cell set exposed in an exposure switch cycle t*ₑ* that is phase-shifted by 2π/N relative to each other; and
obtaining depth data of the object to be measured in the imaging area based on the image frames,
wherein the light intensity in each waveform projection area is encoded such that when a single pattern scan is completed within the scanning cycle 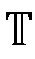 , the N memory cell sets in the image sensor each capture a different striped-light pattern, the N striped-light patterns form a set of N-step phase-shifted patterns, each having a phase-shifted of 2π/N relative to the others.

15. A depth data measuring method, comprising:
using a first depth imaging measuring head of a depth data measuring device to perform a first pattern scan on an imaging area to obtain a first set of N-step phase-shifted patterns;
using a second depth imaging measuring head of the depth data measuring device to perform a second pattern scan on the imaging area to obtain a second set of N-step phase-shifted patterns;
synthesizing depth information of an object to be imaged in the imaging area from the first set of N-step phase-shifted patterns and the second set of N-step phase-shifted patterns based on the relative positions of the first depth imaging measuring head and the second depth imaging measuring head,
wherein the first depth imaging measuring head and the second depth imaging measuring head each performs scanning imaging by the method according to claim 14.

## Patentansprüche

1. Tiefendatenmesskopf (300), umfassend:
eine Projektionseinrichtung (310) zum Projizieren von sich in einer ersten Richtung bewegendem Linienlicht auf einen Abbildungsbereich, wobei die Länge des Linienlichts in einer zweiten Richtung verläuft, die senkrecht zu der ersten Richtung ist;
einen Bildsensor, der N Speicherzellensätze umfasst, wobei jeder Speicherzellensatz in einem Belichtungsumschaltzyklus t*ₑ* belichtet wird, der gegenüber den jeweils anderen um 2π/N phasenverschoben ist, wobei N eine ganze Zahl größer als 1 ist,
wobei die Projektionseinrichtung innerhalb eines Abtastzyklus 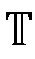 einen einzelnen Musterabtastvorgang abschließt, wobei der Abtastzyklus mehrere sich wiederholende Unterzyklen 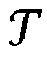 umfasst, wobei sich in jedem Unterzyklus 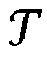 die Helligkeit des Linienlichts mit einem Projektionszyklus t*ₚ* ändert, der die gleiche Dauer wie der Belichtungsumschaltzyklus t*ₑ* aufweist, wobei der Projektionszyklus t*ₚ* N Wellenformprojektionsbereiche umfasst, die jeweils eine Breite von 2π/N aufweisen, wobei die Lichtintensität in jedem Wellenformprojektionsbereich derart codiert ist, dass dann, wenn innerhalb des Abtastzyklus 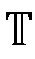 ein einzelner Musterabtastvorgang abgeschlossen ist, die N Speicherzellensätze in dem Bildsensor jeweils ein unterschiedliches Streifenlichtmuster erfassen, wobei die N Streifenlichtmuster einen Satz von N-stufig phasenverschobenen Mustern bilden, von denen jedes gegenüber den anderen eine Phasenverschiebung von 2π/N aufweist, wobei N=2*ⁿ* gilt und n eine ganze Zahl größer als oder gleich 1 ist.

2. Tiefendatenmesskopf nach Anspruch 1, wobei jeder Wellenformprojektionsbereich einer projizierten Rechteckwelle mit einer Breite von 2π/N oder 0 entspricht, wobei die Lichtintensität jedes Wellenformprojektionsbereichs basierend auf der Lichtintensitätsverteilung des dem Unterzyklus 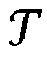 entsprechenden Satzes von N-stufig phasenverschobenen Mustern bestimmt wird.

3. Tiefendatenmesskopf nach Anspruch 2, wobei der Satz von N-stufig phasenverschobenen Mustern ein vierstufig phasenverschobenes Sinuswellenmuster ist und der Lichtintensitätswert jedes Wellenformprojektionsbereichs in jedem Projektionszyklus t*ₚ* basierend auf der Belichtung von N Speicherzellensätzen, die dem Wellenformprojektionsbereich entsprechen, erhalten wird, wobei der Lichtintensitätswert nicht kleiner als null ist.

4. Tiefendatenmesskopf nach Anspruch 1, wobei die der Abtastung des Linienlichts an jeder Pixelspalte entsprechende Verweilzeit t*_{c}* nicht kleiner als der Quotient aus dem Abtastzyklus 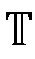 und der Spaltenanzahl C ist und die Verweilzeit t*_{c}* mehr als das Zehnfache des Projektionszyklus t*ₚ* beträgt.

5. Tiefendatenmesskopf nach Anspruch 3, wobei in jeder Unterphase T*ᵢ* das Linienlicht *m*-mal mit dem Projektionszyklus t*ₚ* projiziert wird und die Dauer jeder Unterphase T*ᵢ* größer als die Verweilzeit t*_{c}* ist.

6. Tiefendatenmesskopf nach Anspruch 1, wobei jedes Pixel in dem Bildsensor N Speicherzellen umfasst und jede der N Speicherzellen eines Pixels zu einem der N Speicherzellensätze gehört, wobei die in jedem Pixel enthaltenen N Speicherzellen N Ladungsspeicherzellen sind und die Belichtungspositionen der einem Pixel entsprechenden N Ladungsspeicherzellen gleich sind, die Belichtungszyklen jedoch gegeneinander um 2π/N phasenverschoben sind, und
wobei dann, wenn innerhalb des Abtastzyklus 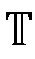 ein einzelner Musterabtastvorgang abgeschlossen ist, der Satz von N-stufig phasenverschobenen Mustern aus den N Sätzen von Ladungsspeicherzellen erhalten wird und der Satz von N-stufig phasenverschobenen Mustern zum Erzeugen einer Tiefenkarte des Abbildungsbereichs verwendet wird.

7. Tiefendatenmesskopf nach Anspruch 1, wobei der Bildsensor N Sätze von auf der Abbildungsfläche gleichmäßig verteilten Pixeln umfasst, wobei jedes Pixel eine entsprechende Speicherzelle aufweist, und wobei dann, wenn innerhalb des Abtastzyklus 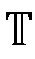 ein einzelner Musterabtastvorgang abgeschlossen ist, der Satz von N-stufig phasenverschobenen Mustern aus den N Speicherzellensätzen erhalten wird, die den N Pixelsätzen entsprechen, und der Satz von N-stufig phasenverschobenen Mustern zum Erzeugen einer Tiefenkarte des Abbildungsbereichs verwendet wird.

8. Tiefendatenmesskopf nach Anspruch 1, wobei die Projektionseinrichtung in einem ersten Abtastzyklus 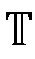 einen einzelnen Musterabtastvorgang derart abschließt, dass die N Speicherzellensätze in dem Bildsensor jeweils ein unterschiedliches Streifenlichtmuster erfassen und die N Streifenlichtmuster einen Satz von Gray-Code-Mustern bilden,
wobei die Projektionseinrichtung in einem zweiten Abtastzyklus 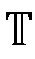 einen weiteren einzelnen Musterabtastvorgang derart abschließt, dass die N Speicherzellensätze jeweils ein unterschiedliches Streifenlichtmuster erfassen und die N Streifenlichtmuster den Satz von N-stufig phasenverschobenen Mustern bilden,
wobei basierend auf dem Satz von Gray-Code-Mustern eine Tiefenkarte des Abbildungsbereichs aus dem Satz von N-stufig phasenverschobenen Mustern erzeugt wird.

9. Tiefendatenmesskopf nach Anspruch 1, wobei der Bildsensor einen ersten Bildsensor (320_1) und einen zweiten Bildsensor (320_2) umfasst, deren relative Positionen festgelegt sind, wobei der erste Bildsensor und der zweite Bildsensor jeweils die N Speicherzellensätze umfassen und synchron zueinander belichtet werden.

10. Tiefendatenmesskopf nach Anspruch 1, wobei die Projektionseinrichtung innerhalb von α Abtastzyklen 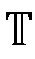 α Musterabtastvorgänge abschließt, wobei jeder der Abtastzyklen 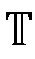 mehrere sich wiederholende Unterzyklen 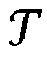 umfasst, jeder Unterzyklus 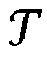 N Unterphasen T*₁*-T*_{N}* umfasst und in jeder Unterphase T*ᵢ* das Linienlicht mit Helligkeitsänderungen in dem Projektionszyklus t*ₚ* projiziert wird, wobei die Dauer des Projektionszyklus t*ₚ* gleich der Dauer des Belichtungsumschaltzyklus t*ₑ* ist und der Projektionszyklus t*ₚ* einen hellen Bereich umfasst, wobei sich in den Unterphasen T*₁*-T*_{N}* die Position des hellen Bereichs in dem Projektionszyklus t*ₚ* in einem Phasenintervall von 2π/αN ändert, sodass dann, wenn innerhalb jedes Abtastzyklus 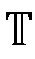 ein einzelner Musterabtastvorgang abgeschlossen ist, die N Speicherzellensätze des Bildsensors jeweils ein unterschiedliches Streifenlichtmuster abbilden und dann, wenn innerhalb von α Abtastzyklen 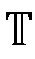 α Musterabtastvorgänge abgeschlossen sind, αN Streifenlichtmuster einen Satz von αN-stufig phasenverschobenen Mustern bilden, die jeweils eine Phasenverschiebung von 2π/αN zueinander aufweisen, wobei α eine ganze Zahl größer als oder gleich 2 ist.

11. Tiefendatenmesskopf nach Anspruch 1, wobei jeder Unterzyklus 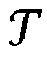 N Unterphasen T*₁*-T*_{N}* umfasst und in jeder Unterphase T*ᵢ* das Linienlicht mit Helligkeitsänderungen in dem Projektionszyklus t*ₚ* projiziert wird, wobei die Dauer des Projektionszyklus t*ₚ* gleich der Dauer des Belichtungsumschaltzyklus t*ₑ* ist und der Projektionszyklus t*ₚ* einen hellen Bereich umfasst, wobei sich in den Unterphasen T*₁*-T*_{N}* die Position des hellen Bereichs in dem Projektionszyklus t*ₚ* in einem Phasenintervall von 2π/N ändert, sodass dann, wenn innerhalb jedes Abtastzyklus 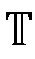 ein einzelner Musterabtastvorgang abgeschlossen ist, die N Speicherzellensätze des Bildsensors jeweils ein unterschiedliches Streifenlichtmuster abbilden und die N Streifenlichtmuster den Satz von N-stufig phasenverschobenen Mustern bilden, die jeweils eine Phasenverschiebung von 2π/N zueinander aufweisen.

12. Tiefendatenmessvorrichtung (1500), umfassend:
einen Tiefendatenmesskopf nach einem der Ansprüche 1 bis 11; und
einen Prozessor (1530), der mit dem Tiefendatenmesskopf verbunden und dazu ausgelegt ist, aus den erhaltenen N Streifenlichtmustern eine Tiefenkarte des Abbildungsbereichs zu erhalten, wenn innerhalb des Abtastzyklus 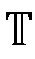 ein einzelner Musterabtastvorgang abgeschlossen wird.

13. Tiefendatenmessvorrichtung (1900), umfassend: einen ersten Tiefenbildmesskopf (1910) und einen zweiten Tiefenbildmesskopf (1920), deren relative Positionen festgelegt sind, wobei der erste Tiefenbildmesskopf und der zweite Tiefenbildmesskopf Tiefendatenmessköpfe nach einem der Ansprüche 1 bis 11 sind,
wobei, nachdem der erste Tiefenbildmesskopf einen ersten Musterabtastvorgang abgeschlossen hat, der zweite Tiefenbildmesskopf einen zweiten Musterabtastvorgang durchführt und ein durch den ersten Musterabtastvorgang erhaltener erster Satz von N-stufig phasenverschobenen Mustern und ein durch den zweiten Musterabtastvorgang erhaltener zweiter Satz von N-stufig phasenverschobenen Mustern basierend auf der relativen Position zu Tiefeninformationen eines abzubildenden Objekts in einem Abbildungsbereich synthetisiert werden.

14. Tiefendatenmessverfahren, umfassend:
Projizieren von sich in einer ersten Richtung bewegendem Linienlicht auf einen Abbildungsbereich, wobei die Länge des Linienlichts in einer zweiten Richtung verläuft, die senkrecht zu der ersten Richtung ist, wobei durch die Linienlichtprojektion in einem Abtastzyklus 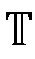 ein einzelner Musterabtastvorgang abgeschlossen wird, wobei der Abtastzyklus mehrere sich wiederholende Unterzyklen 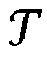 umfasst, wobei sich in jedem Unterzyklus 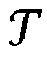 die Helligkeit des Linienlichts mit einem Projektionszyklus t*ₚ* ändert, der die gleiche Dauer wie der Belichtungsumschaltzyklus t*ₑ* aufweist, wobei der Projektionszyklus t*ₚ* N Wellenformprojektionsbereiche umfasst, die jeweils eine Breite von 2π/N aufweisen, wobei die Lichtintensität in jedem Wellenformprojektionsbereich codiert ist und N eine ganze Zahl größer als 1 ist;
Erfassen des Abbildungsbereichs unter Verwendung eines Bildsensors, der N Speicherzellensätze umfasst, um N Bildrahmen unter der Linienlicht-Abtastprojektion zu erhalten, wobei jeder Speicherzellensatz in einem Belichtungsumschaltzyklus t*ₑ* belichtet wird, der gegenüber den jeweils anderen um 2π/N phasenverschoben ist; und
Erhalten von Tiefendaten des zu messenden Objekts im Abbildungsbereich basierend auf der Bildrahmen,
wobei die Lichtintensität in jedem Wellenformprojektionsbereich derart codiert ist, dass dann, wenn innerhalb des Abtastzyklus 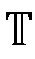 ein einzelner Musterabtastvorgang abgeschlossen ist, die N Speicherzellensätze in dem Bildsensor jeweils ein unterschiedliches Streifenlichtmuster erfassen, wobei die N Streifenlichtmuster einen Satz von N-stufig phasenverschobenen Mustern bilden, von denen jedes gegenüber den anderen eine Phasenverschiebung von 2π/N aufweist.

15. Tiefendatenmessverfahren, umfassend:
Verwenden eines ersten Tiefenbildmesskopfs einer Tiefendatenmessvorrichtung, um einen ersten Musterabtastvorgang an einem Abbildungsbereich durchzuführen und einen ersten Satz von N-stufig phasenverschobenen Mustern zu erhalten;
Verwenden eines zweiten Tiefenbildmesskopfs der Tiefendatenmessvorrichtung, um einen zweiten Musterabtastvorgang an dem Abbildungsbereich durchzuführen und einen zweiten Satz von N-stufig phasenverschobenen Mustern zu erhalten;
Synthetisieren von Tiefeninformationen eines abzubildenden Objekts in dem Abbildungsbereich aus dem ersten Satz von N-stufig phasenverschobenen Mustern und dem zweiten Satz von N-stufig phasenverschobenen Mustern basierend auf den relativen Positionen des ersten Tiefenbildmesskopfs und des zweiten Tiefenbildmesskopfs,
wobei der erste Tiefenbildmesskopf und der zweite Tiefenbildmesskopf jeweils eine Abtastbildgebung gemäß dem Verfahren nach Anspruch 14 durchführen.

## Revendications

1. Tête de mesure de données de profondeur (300), comprenant :
un dispositif de projection (310) pour projeter une lumière linéaire qui se déplace dans une première direction vers une zone d'imagerie, une longueur de la lumière linéaire étant dans une seconde direction perpendiculaire à la première direction ;
un capteur d'image incluant N ensembles de cellules de mémoire, chaque ensemble de cellules de mémoire étant exposé dans un cycle de commutation d'exposition t*ₑ* qui présente un déphasage de 2π/N l'un par rapport à l'autre, où N est un entier supérieur à 1,
dans laquelle le dispositif de projection complète un seul balayage de motif dans un cycle de balayage 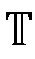 , qui inclut plusieurs sous-cycles 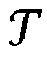 répétitifs, dans chaque sous-cycle 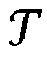 , la lumière linéaire change de luminosité avec un cycle de projection t*ₚ* dont la durée est identique à celle du cycle de commutation d'exposition t*ₑ*, le cycle de projection t*ₚ* inclut N zones de projection de forme d'onde, chacune ayant une largeur de 2π/N, l'intensité lumineuse dans chaque zone de projection de forme d'onde étant encodée de sorte que lorsqu'un seul balayage de motif est complété dans le cycle de balayage 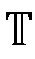 , les N ensembles de cellules de mémoire du capteur d'image capturent chacun un motif différent à lumières rayées, et les N motifs à lumières rayées forment un ensemble de motifs déphasés en N étapes, chacun présentant un déphasage de 2π/N par rapport aux autres, où N=2*ⁿ*, et n est un entier supérieur ou égal à 1.

2. Tête de mesure de données de profondeur selon la revendication 1, dans laquelle chaque zone de projection de forme d'onde correspond à une onde rectangulaire projetée d'une largeur de 2π/N ou 0, et l'intensité lumineuse de chaque zone de projection de forme d'onde est déterminée sur la base de la distribution d'intensité lumineuse de l'ensemble de motifs déphasés en N étapes correspondant à la sous-cycle 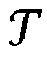 .

3. Tête de mesure de données de profondeur selon la revendication 2, dans laquelle l'ensemble de motifs déphasés en N étapes est un motif déphasé en quatre étapes d'onde sinusoïdale, et la valeur d'intensité lumineuse de chaque zone de projection de forme d'onde dans chaque cycle de projection t*ₚ* est obtenue sur la base de l'exposition de N ensembles de cellules de mémoire correspondant à la zone de projection de forme d'onde, la valeur d'intensité lumineuse n'étant pas inférieure à zéro.

4. Tête de mesure de données de profondeur selon la revendication 1, dans laquelle le temps de séjour t*_{c}* correspondant au balayage à lumière linéaire sur chaque colonne de pixels n'est pas inférieur au quotient du cycle de balayage 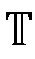 divisé par le nombre de colonnes C, et le temps de séjour t*_{c}* est supérieur à 10 fois le cycle de projection t*ₚ*.

5. Tête de mesure de données de profondeur selon la revendication 3, dans laquelle dans chaque sous-phase T*ᵢ*, la lumière linéaire est projetée *m* fois avec le cycle de projection t*ₚ*, et la durée de chaque sous-phase T*ᵢ* est supérieure au temps de séjour t*_{c}*.

6. Tête de mesure de données de profondeur selon la revendication 1, dans laquelle chaque pixel du capteur d'image inclut N cellules de mémoire, et chacune des N cellules de mémoire d'un pixel appartient à l'un des N ensembles de cellules de mémoire, et les N cellules de mémoire incluses dans chaque pixel sont N cellules de mémoire de charges, et des positions d'exposition des N cellules de mémoire de charges correspondant à un pixel sont identiques, mais les cycles d'exposition présentent un déphasage de 2π/N les uns par rapport aux autres, et
lorsqu'un seul balayage de motif est complété dans le cycle de balayage 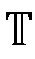 , l'ensemble de motifs déphasés en N étapes est obtenu à partir des N ensembles de cellules de mémoire de charges, et l'ensemble de motifs déphasés en N étapes est utilisé pour générer une carte de profondeur de la zone d'imagerie.

7. Tête de mesure de données de profondeur selon la revendication 1, dans laquelle le capteur d'image inclut N ensembles de pixels uniformément répartis sur la surface d'imagerie, chaque pixel ayant une cellule de mémoire correspondante, lorsqu'un seul balayage de motif est complété dans le cycle de balayage 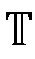 , l'ensemble de motifs déphasés en N étapes est obtenu à partir des N ensembles de cellules de mémoire correspondant aux N ensembles de pixels, et l'ensemble de motifs déphasés en N étapes est utilisé pour générer une carte de profondeur de la zone d'imagerie.

8. Tête de mesure de données de profondeur selon la revendication 1, dans laquelle le dispositif de projection complète un seul balayage de motif dans un premier cycle de balayage 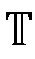 de sorte que les N ensembles de cellules de mémoire dans le capteur d'image capturent chacun un motif différent à lumières rayées, et les N motifs à lumières rayées forment un ensemble de motifs à code de Gray,
le dispositif de projection complète un autre seul balayage de motif dans un second cycle de balayage 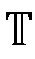 , de sorte que les N ensembles de cellules de mémoire capturent chacun un motif différent à lumières rayées, et les N motifs à lumières rayées forment l'ensemble de motifs déphasés en N étapes,
dans laquelle, sur la base de l'ensemble de motifs à code de Gray, une carte de profondeur de la zone d'imagerie est générée à partir de l'ensemble de motifs déphasés en N étapes.

9. Tête de mesure de données de profondeur selon la revendication 1, dans laquelle le capteur d'image inclut un premier capteur d'image (320_1) et un second capteur d'image (320_2) dont des positions relatives sont fixes, le premier capteur d'image et le second capteur d'image incluant chacun les N ensembles de cellules de mémoire et étant exposés de manière synchrone l'un à l'autre.

10. Tête de mesure de données de profondeur selon la revendication 1, dans laquelle le dispositif de projection complète α balayages de motif dans α cycles de balayage 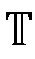 , chaque cycle de balayage 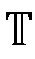 inclut plusieurs sous-cycles 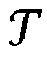 répétitifs, chaque sous-cycle 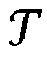 inclut N sous-phases T*₁*-T*_{N}*, et dans chaque sous-phase T*ᵢ*, la lumière linéaire est projetée avec des changements de luminosité lors du cycle de projection t*ₚ*, la durée du cycle de projection t*ₚ* est identique à la durée du cycle de commutation d'exposition t*ₑ*, et le cycle de projection t*ₚ* inclut une zone lumineuse, dans laquelle, dans sous-phases T*₁*-T*_{N}*, la position de la zone lumineuse dans le cycle de projection t*ₚ* change à un intervalle de phase de 2π/αN, de sorte que lorsqu'un seul balayage de motif soit complété dans chaque cycle de balayage 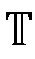 , les N ensembles de cellules de mémoire du capteur d'image imagent chacun un motif différent à lumières rayées, et lorsque α balayages de motif sont complétés dans α cycles de balayage 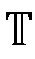 , αN motifs à lumières rayées constituent un ensemble de motifs déphasés en αN étapes avec un déphasage de 2π/αN entre eux, où α est un entier supérieur ou égal à 2.

11. Tête de mesure de données de profondeur selon la revendication 1, dans laquelle chaque sous-cycle 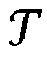 inclut N sous-phases T*₁*-T*_{N}*, et dans chaque sous-phase T*ᵢ*, la lumière linéaire est projetée avec des changements de luminosité lors du cycle de projection t*ₚ*, la durée du cycle de projection t*ₚ* est identique à la durée du cycle de commutation d'exposition t*ₑ*, et le cycle de projection t*ₚ* inclut une zone lumineuse, dans laquelle, dans sous-phases T*₁*-T*_{N}*, la position de la zone lumineuse dans le cycle de projection t*ₚ* change à un intervalle de phase de 2π/N, de sorte que lorsqu'un seul balayage de motif soit complété dans chaque cycle de balayage 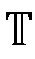 , les N ensembles de cellules de mémoire du capteur d'image imagent chacun un motif différent à lumières rayées, et les N motifs à lumières rayées constituent l'ensemble de motifs déphasés en N étapes avec un déphasage de 2π/N entre eux.

12. Dispositif de mesure de données de profondeur (1500), comprenant :
une tête de mesure de données de profondeur selon l'une quelconque des revendications 1 à 11 ; et
un processeur (1530) connecté à la tête de mesure de données de profondeur, configuré pour obtenir une carte de profondeur de la zone d'imagerie à partir des N motifs à lumières rayées obtenus lors du complètement d'un seul balayage de motif dans le cycle de balayage 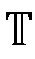 .

13. Dispositif de mesure de données de profondeur (1900), comprenant : une première tête de mesure d'imagerie de profondeur (1910) et une seconde tête de mesure d'imagerie de profondeur (1920) dont des positions relatives sont fixes, la première tête de mesure d'imagerie de profondeur et la seconde tête de mesure d'imagerie de profondeur étant les têtes de mesure de données de profondeur selon l'une quelconque des revendications 1 à 11,
dans lequel, après que la première tête de mesure d'imagerie de profondeur a complété un premier balayage de motif, la seconde tête de mesure d'imagerie de profondeur effectue un second balayage de motif, et un premier ensemble de motifs déphasés en N étapes obtenu par le premier balayage de motif et un second ensemble de motifs déphasés en N étapes obtenu par le second balayage de motif sont synthétisés en informations de profondeur d'un objet à imager dans une zone d'imagerie sur la base de la position relative.

14. Procédé de mesure de données de profondeur, comprenant :
projeter une lumière linéaire qui se déplace dans une première direction vers une zone d'imagerie, dans lequel une longueur de la lumière linéaire est dans une seconde direction perpendiculaire à la première direction, une projection de lumière linéaire complète un seul balayage de motif dans un cycle de balayage 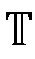 , qui inclut plusieurs sous-cycles 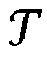 répétitifs, dans chaque sous-cycle 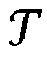 , la lumière linéaire change de luminosité avec un cycle de projection t*ₚ*, dont la durée est identique à celle du cycle de commutation d'exposition t*ₑ*, le cycle de projection t*ₚ* inclut N zones de projection de forme d'onde, chacune ayant une largeur de 2π/N, l'intensité lumineuse dans chaque zone de projection de forme d'onde étant encodée, et N étant un entier supérieur à 1 ;
capturer la zone d'imagerie à l'aide d'un capteur d'image incluant N ensembles de cellules de mémoire pour obtenir N trames d'image sous la projection de balayage à lumière linéaire, chaque ensemble de cellules de mémoire étant exposé dans un cycle de commutation d'exposition t*ₑ* qui présente un déphasage de 2π/N l'un par rapport à l'autre ; et
obtenir des données de profondeur de l'objet à mesurer dans la zone d'imagerie sur la base des trames d'image,
dans lequel l'intensité lumineuse dans chaque zone de projection de forme d'onde est encodée de sorte que lorsqu'un seul balayage de motif est complété dans le cycle de balayage 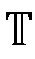 , les N ensembles de cellules de mémoire du capteur d'image capturent chacun un motif différent à lumières rayées, et les N motifs à lumières rayées forment un ensemble de motifs déphasés en N étapes, chacun présentant un déphasage de 2π/N par rapport aux autres,

15. Procédé de mesure de données de profondeur, comprenant :
utiliser une première tête de mesure d'imagerie de profondeur d'un dispositif de mesure de données de profondeur pour effectuer un premier balayage de motif sur une zone d'imagerie afin d'obtenir un premier ensemble de motifs déphasés en N étapes ;
utiliser une seconde tête de mesure d'imagerie de profondeur du dispositif de mesure de données de profondeur pour effectuer un second balayage de motif sur la zone d'imagerie afin d'obtenir un second ensemble de motifs déphasés en N étapes ;
synthétiser des informations de profondeur d'un objet à imager dans la zone d'imagerie à partir du premier ensemble de motifs déphasés en N étapes et du second ensemble de motifs déphasés en N étapes sur la base des positions relatives de la première tête de mesure d'imagerie de profondeur et de la seconde tête de mesure d'imagerie de profondeur,
dans lequel, la première tête de mesure d'imagerie de profondeur et la seconde tête de mesure d'imagerie de profondeur effectuent chacune une imagerie de balayage à travers le procédé selon la revendication 14.
